# EUROPEAN PATENT SPECIFICATION

(11) **EP 3 504 283 B1**
(45) Date of publication and mention of the grant of the patent: **07.04.2021**
(21) Application number: 18779755.0
(22) Date of filing: 16.08.2018
(51) Int. Cl.: C09D 163/00, C08G 59/22, C08G 59/24, C08G 59/26, C09D 163/04

(54) **SOLID HOMOGENEOUS AMORPHOUS HIGH HEAT EPOXY BLENDS, ARTICLES, AND USES THEREOF**
FESTE HOMOGENE AMORPHE, HOCHWÄRMEEPOXIDMISCHUNGEN, ARTIKEL UND VERWENDUNGEN DAVON
MÉLANGES ET ARTICLES ÉPOXY SOLIDES HAUTE TEMPÉRATURE, AMORPHES, HOMOGÈNES, ET LEURS UTILISATIONS

(30) Priority: 16.08.2017 IN 201711028951
(43) Date of publication of application: 03.07.2019
(73) Proprietor: SHPP Global Technologies B.V., 4612 PX Bergen op Zoom (NL)
(72) Inventor: PETERS, Edward Norman, Lenox, Massachusetts 01240 (US); PAL, Jaykisor, Bangalore Karnataka 562125 (IN); SISTA, Prakash, Mt. Vernon, Indiana 47620-9367 (US)
(74) Representative: Modiano, Micaela Nadia
(86) International application number: PCT/IB2018/056195
(87) International publication number: WO 2019/035054

(56) References cited:
- WO-A1-2018/057056
- WO-A1-2018/057056
- US-A1- 2017 158 806

## Description

### BACKGROUND

Epoxy polymers are used in a wide variety of applications including protective coatings, adhesives, electronic laminates, flooring and paving applications, glass fiber-reinforced pipes, and automotive parts. In their cured form, epoxy polymers offer desirable properties including good adhesion to other materials, excellent resistance to corrosion and chemicals, high tensile strength, and good electrical resistance. However, there are challenges in balancing high glass transition temperature (T_{g}) and toughness in cured epoxy polymers. For example, U.S. Pat. Pub. No. 2017/0158806 A1 describes high heat, high purity epoxide compounds having good thermal and mechanical performance (e.g., high glass transition temperatures and ductility), and articles derived therefrom that may be particularly suited for transportation and aerospace applications. Intl. Pat. Pub. No. WO 2018/057056 A1 also describes amorphous blends of high heat epoxy compounds and auxiliary epoxy compounds prepared at elevated temperatures that can exhibit glass transition temperatures around room temperature or below.

Solid polymers can be used as components of powder coating formulations to increase toughness. However, higher temperatures are commonly required to soften the solid polymers to prepare blends, which can prematurely start the curing process at temperatures near 120°C or even lower depending on the curing promoters in the formulation.

Accordingly, there remains a need for epoxy-based materials with improved properties for use in powder coating formulations and other uses.

### SUMMARY

A solid epoxy composition comprises a high heat epoxy compound of one or more of formulas (I) to (IX): 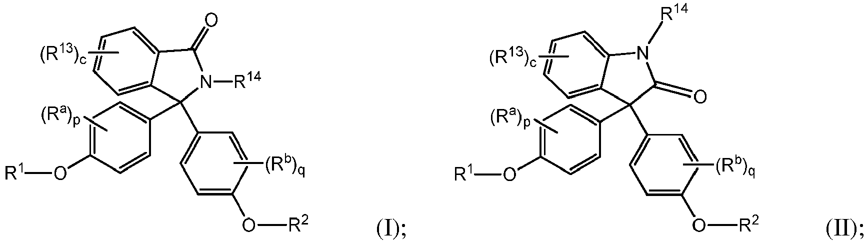 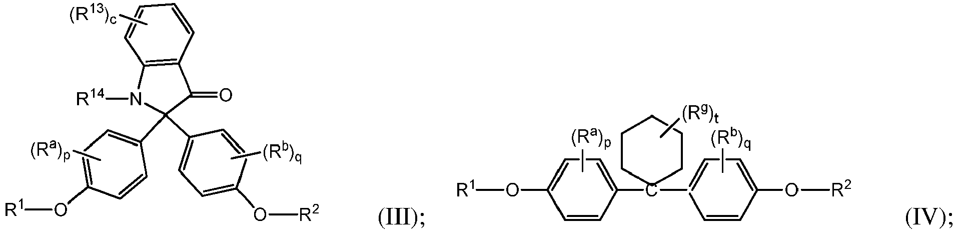 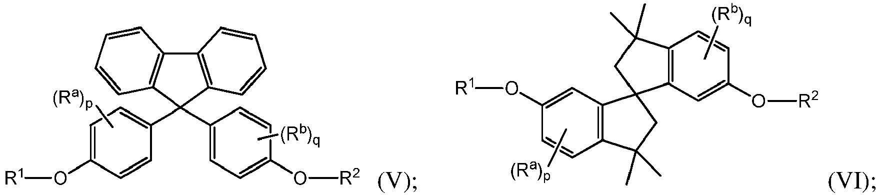 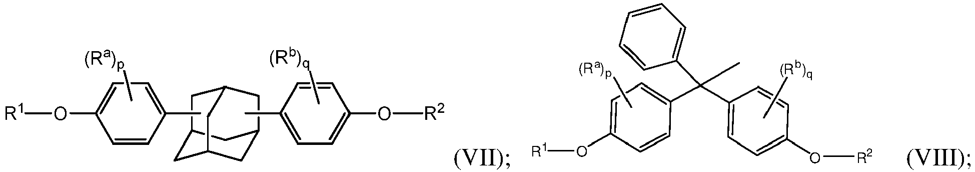 or 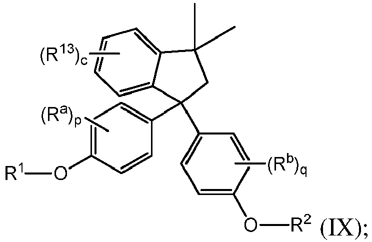 wherein R¹ and R² at each occurrence are each independently an epoxide-containing functional group; R^{a} and R^{b} at each occurrence are each independently halogen, C₁-C₁₂ alkyl, C₂-C₁₂ alkenyl, C₃-C₈ cycloalkyl, or C₁-C₁₂ alkoxy; p and q at each occurrence are each independently 0 to 4; R¹³ at each occurrence is independently a halogen or a C₁-C₆ alkyl group; c at each occurrence is independently 0 to 4; R¹⁴ at each occurrence is independently a C₁-C₆ alkyl, phenyl, or phenyl substituted with up to five halogen atoms or C₁-C₆ alkyl groups; R^{g} at each occurrence is independently C₁-C₁₂ alkyl or halogen, or two R^{g} groups together with the carbon atoms to which they are attached form a four-, five-, or six-membered cycloalkyl group; and t is 0 to 10; wherein the high heat epoxy compound has a melting point greater than 100°C; and an amorphous epoxy compound; wherein the solid epoxy composition has a single glass transition temperature from 35 to 100°C, preferably from 40 to 95°C, measured as per ASTM D3418, and wherein the solid epoxy composition exhibits no other glass transition temperature or crystalline melting point from -20 to 200°C.

A method for the manufacture of the solid epoxy composition comprises heating the high heat epoxy compound and the amorphous epoxy compound at a temperature greater than a softening point of at least one of the amorphous epoxy compound or the high heat epoxy compound to provide a reaction mixture; and cooling the reaction mixture to a temperature less than the softening point to provide the solid epoxy composition.

A powder coating composition comprises a solid epoxy composition comprising 5 to 95 weight percent of an amorphous epoxy compound and 95 to 5 weight percent of a high heat epoxy compound; and a curing promoter in an amount effective to cure the powder coating composition, wherein the solid composition has a single glass transition temperature from 35 to 100°C, measured as per ASTM D3418, and wherein the solid composition exhibits no other glass transition temperature or crystalline melting point from -20 to 200°C.

An article comprises a cured product of the solid epoxy composition or the powder coating composition, preferably wherein the article is in the form of a composite, a foam, a fiber, a layer, a coating, an encapsulant, an adhesive, a sealant, a component, a prepreg, a casing, or a combination comprising at least one of the foregoing.

The above described and other features are exemplified by the following detailed description.

### DETAILED DESCRIPTION

The inventors hereof have discovered solid epoxy compositions that provide desirable properties. Provided herein is a homogeneous solid epoxy composition that can be prepared from a blend of a high heat epoxy compound and an amorphous epoxy compound. The homogeneity of the epoxy blend is evidenced by a single glass transition temperature that is below the glass transition temperature of the amorphous epoxy compound. The homogeneous epoxy blend is a solid at room temperature and can have properties such as softening or melting temperatures from 40 to 120°C. The epoxy components can be blended at these temperatures and then cooled to provide, for example, a powder coating composition. In the powder coating composition that includes the epoxy solid composition, both the powder coating composition and the epoxy solid composition can be solids at room temperature (ca. 23°C), and both the powder coating formulation and the epoxy solid composition can be softened, for example, at temperatures from 40 to 120°C to facilitate handling and storage.

In the context of the term "solid epoxy composition", the word "solid" means that the composition is solid at room temperature (i.e., 23°C) and one atmosphere of pressure. This is evidenced by a single glass transition temperature (T_{g}) of 35 to 100°C and the absence of another glass transition temperature or crystalline melting point from -20 to 200°C. Within the range of 35 to 100°C, the T_{g} of the solid epoxy composition can be 40 to 95°C, specifically 50 to 80°C, as determined by differential scanning calorimetry (DSC) in accordance with ASTM D3418.

As used herein, the terms "softening temperature" and "softening point" refer to temperatures greater than the glass transition temperature as determined by differential scanning calorimetry (DSC), dynamic mechanical analysis (DMA), or ring and ball test methods as described in ASTM E28-67, ASTM E28-99, ASTM D36, ASTM D6493-11, and ISO 4625. For example, the softening temperature of the high heat epoxy compound, the amorphous epoxy compound, and the solid epoxy composition can be from 40 to 150°C, or from 40 to 120°C.

The high heat epoxy compound has a structure represented by one or more of formulas (I) to (IX): 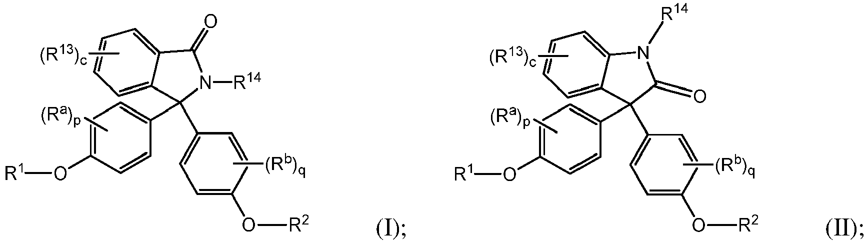 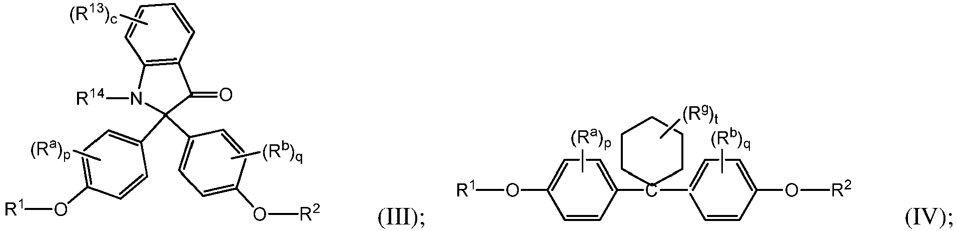 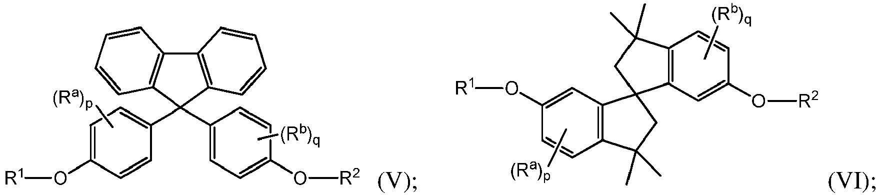 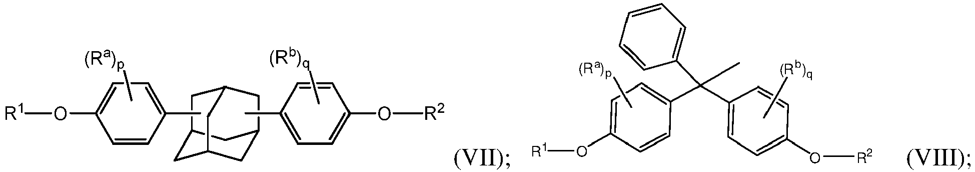 or 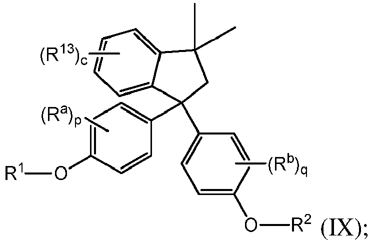 wherein R¹ and R² at each occurrence are each independently an epoxide-containing functional group; R^{a} and R^{b} at each occurrence are each independently halogen, C₁-C₁₂ alkyl, C₂-C₁₂ alkenyl, C₃-C₈ cycloalkyl, or C₁-C₁₂ alkoxy; p and q at each occurrence are each independently 0 to 4; R¹³ at each occurrence is independently a halogen or a C₁-C₆ alkyl group; c at each occurrence is independently 0 to 4; R¹⁴ at each occurrence is independently a C₁-C₆ alkyl, phenyl, or phenyl substituted with up to five halogens or C₁-C₆ alkyl groups; R^{g} at each occurrence is independently C₁-C₁₂ alkyl or halogen, or two R^{g} groups together with the carbon atoms to which they are attached form a four-, five, or six-membered cycloalkyl group; and t is 0 to 10.

In embodiments, R¹ and R² at each occurrence can each be independently of the formula (XA): 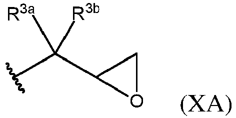 wherein R^{3a} and R^{3b} are each independently hydrogen or C₁-C₁₂ alkyl. In some embodiments, R¹ and R² are each independently of the formula (XB):

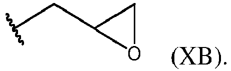

In embodiments, the high heat epoxy compound is one or more of formulas (1) to (9): 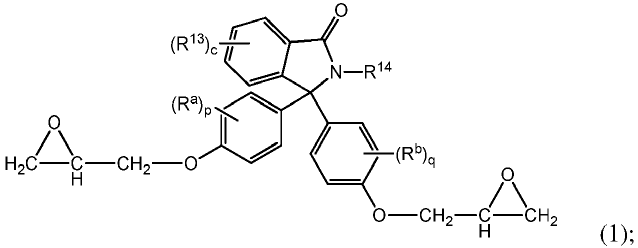 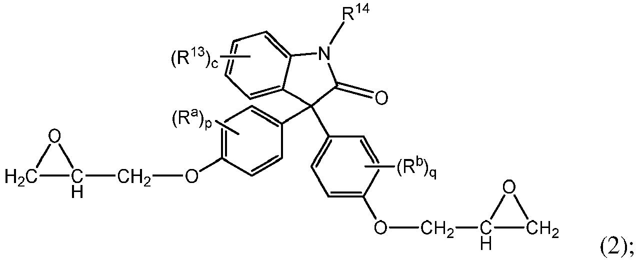 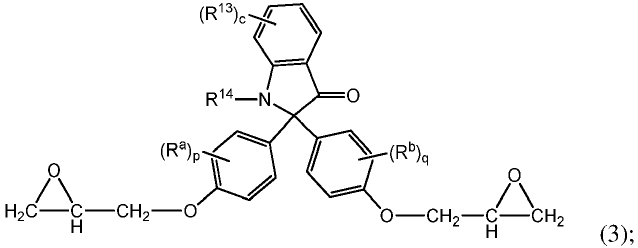 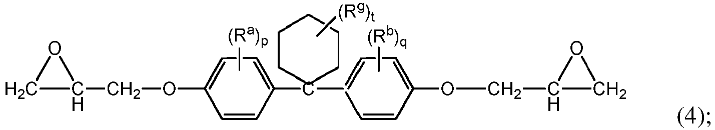 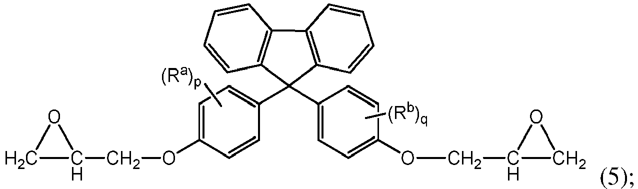 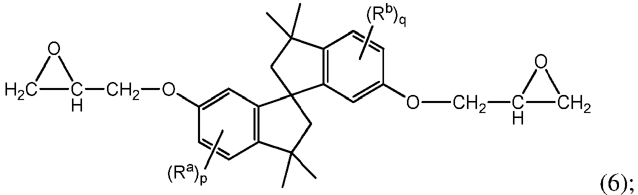 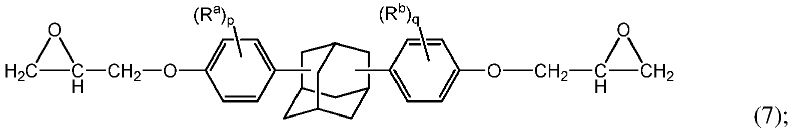 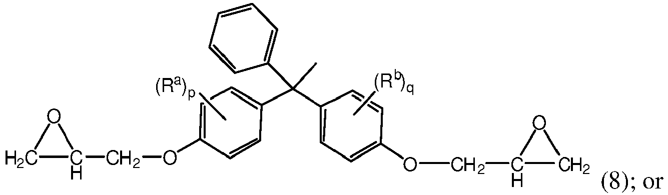 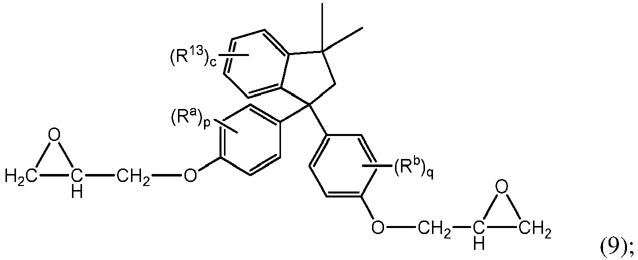 wherein R^{a} and R^{b} at each occurrence are each independently halogen, C₁-C₁₂ alkyl, C₂-C₁₂ alkenyl, C₃-C₈ cycloalkyl, or C₁-C₁₂ alkoxy; p and q at each occurrence are each independently 0 to 4; R¹³ at each occurrence is independently a halogen or a C₁-C₆ alkyl group; c at each occurrence is independently 0 to 4; R¹⁴ at each occurrence is independently a C₁-C₆ alkyl, phenyl, or phenyl substituted with up to five halogen atoms or C₁-C₆ alkyl groups; R^{g} at each occurrence is independently C₁-C₁₂ alkyl or halogen, or two R^{g} groups together with the carbon atoms to which they are attached form a four-, five-, or six-membered cycloalkyl group; and t is 0 to 10.

In some embodiments, R^{a} and R^{b} at each occurrence are each independently halogen, C₁-C₁₂ alkyl, or C₁-C₁₂ alkoxy; p and q at each occurrence are each independently 0 to 2; R¹³ at each occurrence is independently a halogen or a C₁-C₃ alkyl group; c at each occurrence is independently 0 to 2; R¹⁴ at each occurrence is independently a C₁-C₆ alkyl or phenyl; R^{g} at each occurrence is independently C₁-C₁₂ alkyl, or two R^{g} groups together with the carbon atoms to which they are attached form a four-, five-, or six-membered cycloalkyl group; and t is 1 to 5.

In some embodiments, R^{a} and R^{b} at each occurrence are each independently C₁-C6 alkyl, or C₁-C₆ alkoxy; p and q at each occurrence are each independently 0 to 2; R¹³ at each occurrence is independently a C₁-C₃ alkyl group; c at each occurrence is independently 0 to 2; R¹⁴ at each occurrence is independently a C₁-C₃ alkyl or phenyl; R^{g} at each occurrence is independently C₁-C₆ alkyl; and t is 1 to 5.

In an embodiment, the high heat epoxy compound has the formula (1-a)

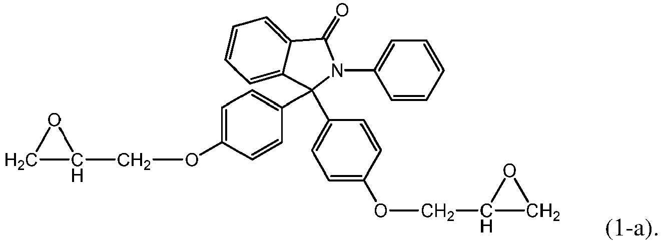

In another embodiment, the high heat epoxy compound has the formula (6-a): 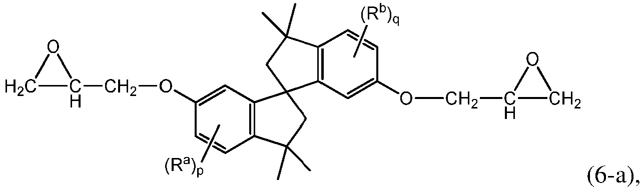 wherein R^{a} and R^{b} at each occurrence are each independently halogen, C₁-C₁₂ alkyl, C₂-C₁₂ alkenyl, C₃-C₈ cycloalkyl, or C₁-C₁₂ alkoxy; and p and q are 0 to 4.

The high heat epoxy compound can be prepared by methods described in, for example, Intl. Pub. No. WO 2016/014536. The high heat epoxy compound can be derived from a corresponding bisphenol compound, for example, a bisphenol of the formulas:

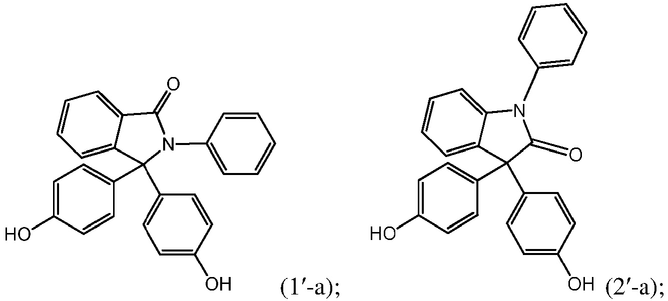

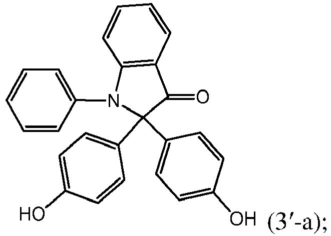

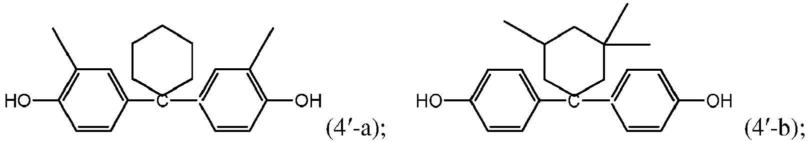

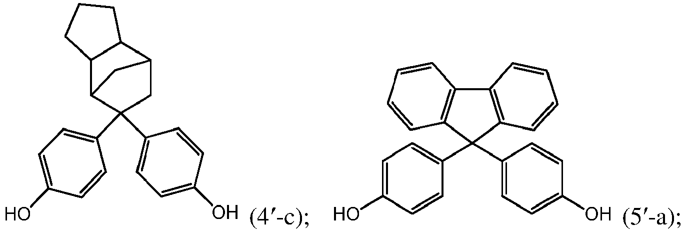

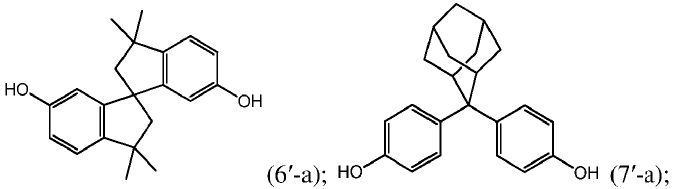

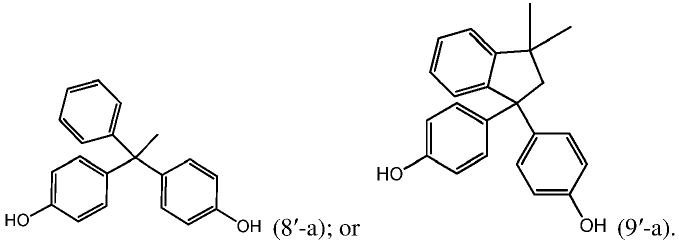

The bisphenol can be reacted with an epoxide source, such as epichlorohydrin. The bisphenol and the epoxide source can be combined with a catalytic amount of base or phase transfer catalyst. Suitable bases include, but are not limited to, carbonates (e.g., sodium bicarbonate, ammonium carbonate, dissolved carbon dioxide, or the like), and hydroxides (e.g., sodium hydroxide, potassium hydroxide, ammonium hydroxide, or the like). The base can be added as a powder (e.g., powdered sodium hydroxide) or as an aqueous solution with concentration 10-70 wt%, for example. The base can be added slowly (e.g., over a time period of 60 to 90 minutes). The reaction can be heated at a suitable temperature, for example, at 20 to 100°C, or 50 to 70, or 50°C to 60. The reaction mixture can be stirred for a suitable time (e.g., 5 hours to 24 hours, or 8 hours to 12 hours). The reaction can be diluted with an organic solvent such as dichloromethane or ethyl acetate, and then washed repeatedly with water until traces of base are removed. The aqueous layer can be discarded and the organic layer concentrated and dried using rotary distillation under reduced pressure to provide a crude product. The crude product can be purified (e.g., by silica gel chromatography) and isolated. The isolated product can be obtained in a yield of 80% or greater, 85% or greater, or 90% or greater.

In certain embodiments, the composition can comprise a high heat epoxy compound wherein the purity is 95% or greater, preferably 97% or greater, preferably 99% or greater, as determined by high performance liquid chromatography (HPLC). For example, Intl. Pub. No. WO 2016/014536A1 and U.S. Pat. Pub. No. 2015/041338 disclose that high purity epoxy with low oligomer content exhibits lower viscosity, which can facilitate fiber wet out during processing to make prepregs and laminates.

The high heat epoxy compound can have a metal impurity content of 3 parts per million (ppm) or less, 2 ppm or less, 1 ppm or less, 500 parts per billion (ppb) or less, 400 ppb or less, 300 ppb or less, 200 ppb or less, or 100 ppb or less. The metal impurities can be iron, calcium, zinc, aluminum, or a combination thereof. The compounds can have an unknown impurities content of 0.1 wt% or less. The compounds can have an APHA color value of 40 or less, 35 or less, 30 or less, 25 or less, 20 or less, 19 or less, 18 or less, 17 or less, 16 or less, or 15 or less, as measured using test method ASTM D1209.

The high heat epoxy compound can be substantially free of epoxide oligomer impurities. For example, the oligomer impurity can be a reaction product having a 3:2 molar ratio of the epoxide source and the bisphenol. The high heat epoxy compound can have an epoxide oligomer impurity content of less than or equal to 3 wt%, less than or equal to 2 wt%, less than or equal to 1 wt%, less than or equal to 0.5 wt%, less than or equal to 0.4 wt%, less than or equal to 0.3 wt%, less than or equal to 0.2 wt%, or less than or equal to 0.1 wt%, as determined by HPLC.

The high heat epoxy compound can have an epoxy equivalent weight (EEW) of 150 to 1400 grams per equivalent (g/eq), preferably 175 to 1200 g/eq, more preferably 200 to 1000 g/eq. The EEW of the high heat epoxy compound can correspond to the purity of the high heat epoxy compound, for example, of 95% purity or greater, 96% purity or greater, 97% purity or greater, 98% purity or greater, 99% purity or greater, or 100% purity. EEW can be determined by methods known in the art, including ASTM D1652-11e1, "Standard Test Method for Epoxy Content of Epoxy Resins".

In an embodiment, the high heat epoxy compound has a melting point (Tₘ) of greater than 100°C, preferably greater than 120°C, more preferably greater than 130°C, as determined by differential scanning calorimetry (DSC) according to ASTM D3418. The melting point can be measured from 40 to 200°C with a heating rate of 20°C per minute, and the second heating cycle can be used to determine the Tₘ.

The solid epoxy composition includes an amorphous epoxy compound. In an embodiment, the high heat epoxy composition includes 5 to 95 weight percent (wt%) of the amorphous epoxy compound, based on the total weight of the composition. In an embodiment, the high heat epoxy composition includes 10 to 80 wt%, preferably 10 to 50 wt% of the amorphous epoxy compound, based on the total weight of the composition.

In an embodiment, the amorphous epoxy compound is an aliphatic epoxy compound, cycloaliphatic epoxy compound, aromatic epoxy compound, or a combination comprising at least one of the foregoing. The amorphous epoxy compound can be of the formula (10): 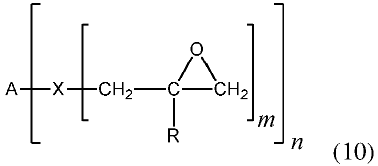 wherein A is an organic or inorganic radical of valence n, X is oxygen or nitrogen, m is 1 or 2 and consistent with the valence of X, R is hydrogen or methyl, n is 1 to 1000, preferably 1 to 8, more preferably 2 or 3 or 4.

The amorphous epoxy compound can be, for example, of the formulas (11) to (16): 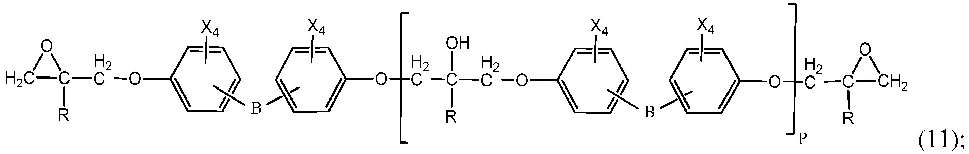 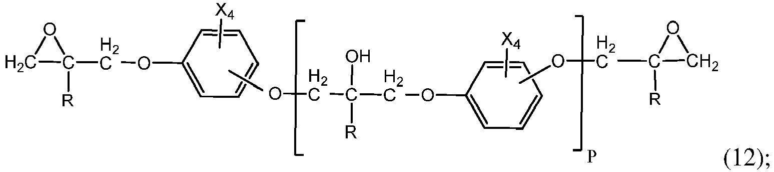 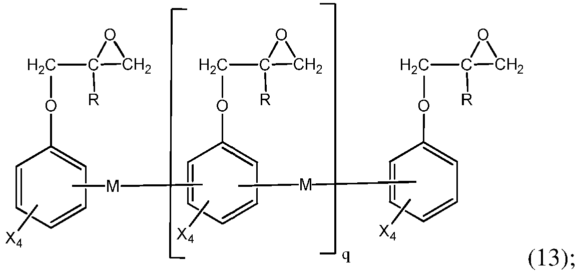 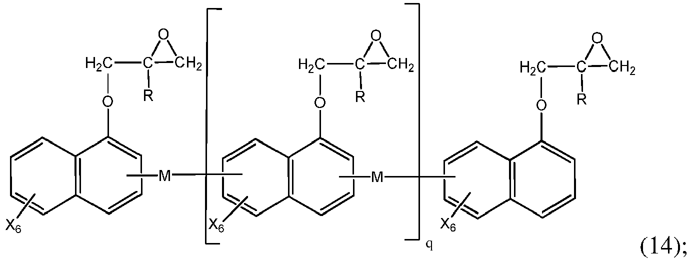 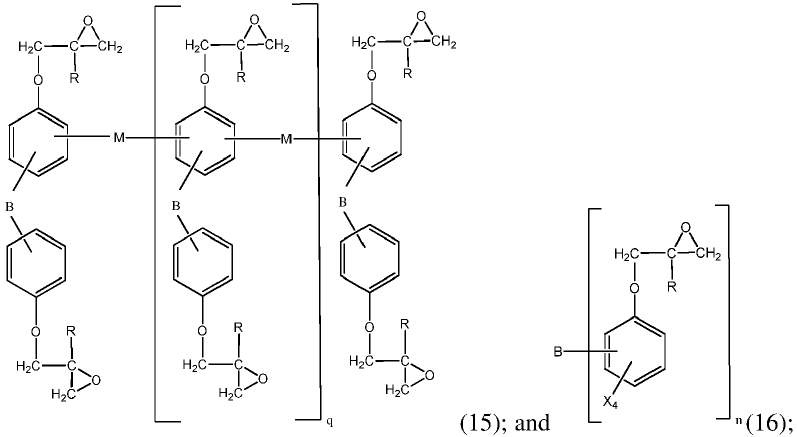 wherein each occurrence of R is independently hydrogen or methyl; each occurrence of M is independently C₁-C₁₈ hydrocarbylene optionally further comprising an oxirane, carboxy, carboxamide, ketone, aldehyde, alcohol, halogen, or nitrile; each occurrence of X is independently hydrogen, chloro, fluoro, bromo, or C₁-C₁₈ hydrocarbyl optionally further comprising a carboxy, carboxamide, ketone, aldehyde, alcohol, halogen, or nitrile; each occurrence of B is independently a carbon-carbon single bond, C₁-C₁₈ hydrocarbyl, C₁-C₁₂ hydrocarbyloxy, C₁-C₁₂ hydrocarbylthio, carbonyl, sulfide, sulfonyl, sulfinyl, phosphoryl, silane, or such groups further comprising a carboxyalkyl, carboxamide, ketone, aldehyde, alcohol, halogen, or nitrile; n is 1 to 20; and each occurrence of p and q is independently 0 to 20.

For example, the amorphous epoxy compound can be a bisphenol A epoxy compound, bisphenol-F epoxy compound, phenol novolac epoxy polymer, cresol-novolac epoxy polymer, biphenyl epoxy compound, triglycidyl p-aminophenol, tetraglycidyl diamino diphenyl methane, a polyfunctional epoxy compound, naphthalene epoxy compound, divinylbenzene dioxide, 2-glycidylphenylglycidyl ether, dicyclopentadiene-type epoxy compound, multi aromatic resin type epoxy polymer, bisphenol-S type epoxy compound, isocyanurate-type epoxy compound, hydantoin-type epoxy compound, or a combination comprising at least one of the foregoing. In one or more embodiments, the amorphous epoxy compound is a bisphenol A diglycidyl ether, a bisphenol F diglycidyl ether, a neopentylglycol diglycidyl ether, a 3,4-epoxycyclohexylmethyl-3,4-epoxycyclohexane carboxylate, a N,N-diglycidyl-4-glycidyloxyaniline, a N,N,N',N'-tetraglycidyl-4,4'-diaminodiphenylmethane, or a combination comprising at least one of the foregoing. In an embodiment, the epoxy compound comprises a bisphenol A diglycidylether epoxy compound.

Other amorphous epoxy compounds include, for example, halogenated hydantoin epoxy compounds, triphenylmethane epoxy compounds, tetra phenyl-glycidyl-ether of tetraphenyl ethane (4 functionality epoxy compound), and novolac type epoxy compounds.

Other suitable amorphous epoxy compounds include N-glycidyl phthalimide, N-glycidyltetrahydrophthalimide, phenyl glycidyl ether, p-butylphenyl glycidyl ether, styrene oxide, neohexene oxide, ethylene glycol diglycidyl ether, polyethylene glycol diglycidyl ether, propylene glycol diglycidyl ether, polypropylene glycol diglycidyl ether, tetramethyleneglycol diglycidyl ether, polytetramethylene glycol diglycidyl ether, resorcinol-type epoxy compounds, phenol novolac-type epoxy compounds, ortho-cresol novolac-type epoxy compounds, adipic acid diglycidyl ester, sebacic acid diglycidyl ester, phthalic acid diglycidyl ester, and combinations comprising at least one of the foregoing.

Other amorphous epoxy compounds include the glycidyl ethers of phenolic compounds such as the glycidyl ethers of phenol-formaldehyde novolac, alkyl substituted phenol-formaldehyde compounds including cresol-formaldehyde novolac, *t*-butylphenol-formaldehyde novolac, *sec*-butylphenol-formaldehyde novolac, *tert*-octylphenol-formaldehyde novolac, cumylphenol-formaldehyde novolac, decylphenol-formaldehyde novolac. Other useful amorphous epoxy compounds are the glycidyl ethers of bromophenol-formaldehyde novolac, chlorophenolformaldehyde novolac, phenol-bis(hydroxymethyl)benzene novolac, phenol-bis(hydroxymethylbiphenyl) novolac, phenol-hydroxybenzaldehyde novolac, phenol-dicyclopentadiene novolac, naphthol-formaldehyde novolac, naphthol-bis(hydroxymethyl)benzene novolac, naphthol-bis(hydroxymethylbiphenyl) novolac, naphthol-hydroxybenzaldehyde novolac, and naphthol-dicyclopentadiene novolacs, or the like, and combinations comprising at least one of the foregoing.

Other suitable amorphous epoxy compounds include the polyglycidyl ethers of polyhydric aliphatic alcohols. Examples of such polyhydric alcohols include 1,4-butanediol, 1,6-hexanediol, polyalkylene glycols, glycerol, trimethylolpropane, 2,2-bis(4-hydroxycyclohexyl)propane, and pentaerythritol.

Still other suitable amorphous epoxy compounds are polyglycidyl esters which are obtained by reacting epichlorohydrin or similar epoxy compounds with an aliphatic, cycloaliphatic, or aromatic polycarboxylic acid, such as oxalic acid, adipic acid, glutaric acid, phthalic, isophthalic, terephthalic, tetrahydrophthalic or hexahydrophthalic acid, 2,6-naphthalenedicarboxylic acid, and dimerized fatty acids. Examples include diglycidyl terephthalate and diglycidyl hexahydrophthalate. In an embodiment, polyepoxide compounds which contain the epoxide groups in random distribution over the molecule chain and which can be prepared by emulsion copolymerization using olefinically unsaturated compounds that contain these epoxide groups, such as, for example, glycidyl esters of acrylic or methacrylic acid, can be used.

Examples of amorphous epoxy compounds that can be used are those based on heterocyclic ring systems, for example hydantoin epoxy compounds, triglycidyl isocyanurate and its oligomers, triglycidyl-p-aminophenol, triglycidyl-p-aminodiphenyl ether, tetraglycidyldiaminodiphenylmethane, tetraglycidyldiaminodiphenyl ether, tetrakis(4-glycidyloxyphenyl)ethane, urazole epoxides, uracil epoxides, and oxazolidinone-modified epoxy compounds .

Other examples of amorphous epoxy compounds are polyepoxides based on aromatic amines, such as aniline, for example N,N-diglycidylaniline, diaminodiphenylmethane and cycloaliphatic epoxy compounds such as 3,4-epoxycyclohexylmethyl-3,4-epoxycyclohexane carboxylate, 4,4'-(1,2-epoxyethyl)biphenyl, 4,4'-di(1,2-epoxyethyl)diphenyl ether, and bis(2,3-epoxycyclopentyl)ether.

Other examples of amorphous epoxy compounds are mixed multifunctional epoxy compounds obtained from compounds that contain a combination of functional groups mentioned above, for example 4-aminophenol.

Examples of mono-functional amorphous epoxy compounds include 2-ethylhexyl glycidyl ether, butyl glycidyl ether, phenyl glycidyl ether, t-butyl glycidyl ether, o-cresyl glycidyl ether, and nonyl phenol glycidyl ether.

Oxazolidinone-modified amorphous epoxy compounds can also be used, such as those disclosed in Angew. Makromol. Chem., vol. 44, (1975), pages 151-163, and U.S. Patent No. 3,334,110 to Schramm. An example is the reaction product of bisphenol A diglycidyl ether with diphenylmethane diisocyanate in the presence of an appropriate accelerator.

Amorphous epoxy compounds can be prepared by condensation of an epoxy compound with a phenol such as a bisphenol. An example is the condensation of bisphenol A with a bisphenol A diglycidyl ether to produce an oligomeric diglycidyl ether. In another embodiment, a phenol dissimilar to the one used to derive the epoxy compound can be used. For example, tetrabromobisphenol A can be condensed with bisphenol A diglycidyl ether to produce an oligomeric diglycidyl ether containing halogens.

Amorphous epoxy compounds for some applications include those produced by the reaction of epichlorohydrin or epibromohydrin with a phenolic compound. Suitable phenolic compounds include resorcinol, catechol, hydroquinone, 2,6-dihydroxynaphthalene, 2,7-dihydroxynapthalene, 2-(diphenylphosphoryl)hydroquinone, bis(2,6-dimethylphenol)2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol (bisphenol A), 4,4'-isopropylidenebis(2,6-dibromophenol) (tetrabromobisphenol A), 4,4'-isopropylidenebis(2,6-dimethylphenol) (teramethylbisphenol A), 4,4'-isopropylidenebis(2-methylphenol), 4,4'-isopropylidenebis(2-allylphenol), 4,4'-(1,3-phenylenediisopropylidene)bisphenol (bisphenol M), 4,4'-isopropylidenebis(3-phenylphenol), 4,4'-(1,4-phenylenediisoproylidene)bisphenol (bisphenol P), 4,4'-ethylidenediphenol (bisphenol E), 4,4'-oxydiphenol, 4,4'-thiodiphenol, 4,4'-thiobis(2,6-dimethylphenol), 4,4'-sulfonyldiphenol, 4,4'-sulfonylbis(2,6-dimethylphenol) 4,4'-sulfinyldiphenol, 4,4'-hexafluoroisoproylidene)bisphenol (Bisphenol AF), 4,4'-(1-phenylethylidene)bisphenol (Bisphenol AP), bis(4-hydroxyphenyl)-2,2-dichloroethylene (Bisphenol C), bis(4-hydroxyphenyl)methane (Bisphenol-F), bis(2,6-dimethyl-4-hydroxyphenyl)methane, 4,4'-(cyclopentylidene)diphenol, 4,4'-(cyclohexylidene)diphenol (Bisphenol Z), 4,4'-(cyclododecylidene)diphenol 4,4'-(bicyclo[2.2.1]heptylidene)diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (spirobiindane), dihydroxybenzophenone (bisphenol K), tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)phenylphosphine oxide, dicyclopentadienylbis(2,6-dimethyl phenol), dicyclopentadienyl bis(2-methylphenol), dicyclopentadienyl bisphenol, or the like, and combinations comprising at least one of the foregoing.

The amorphous epoxy compound can be a solid at room temperature. Thus, in some embodiments, the amorphous epoxy compound has a softening point of 25°C to 150°C. Softening points can be determined, for example, by differential scanning calorimetry (DSC), dynamic mechanical analysis (DMA), or ring and ball test methods as described in ASTM E28-67, ASTM E28-99, ASTM D36, ASTM D6493-11, and ISO 4625. The amorphous epoxy compound can be a softened solid at room temperature. Thus, in some embodiments, the amorphous epoxy compound has a softening point of less than 25°C.

The amorphous epoxy compound can have an epoxy equivalent weight (EEW) of 150 to 1400 grams per equivalent. EEW can be determined by methods known in the art, including ASTM D1652-11e1, "Standard Test Method for Epoxy Content of Epoxy Resins".

The solid epoxy composition can further include a curing promoter. The term "curing promoter" as used herein encompasses compounds whose roles in curing epoxy compounds are variously described as those of a curing agent, hardener, accelerator, catalyst, cocatalyst, or the like. The amount of curing promoter will depend on the type of curing promoter, as well as the identities and amounts of the other components of the solid epoxy composition. In an embodiment, the solid epoxy composition can include the curing agent in an amount of 0.5 to 30 wt%, preferably 3 to 15 wt%, more preferably 5 to 10 wt%, based on the total weight of the solid epoxy composition. For example, when the curing promoter is an aromatic diamine or amine compound, it can be used in an amount of 10 to 30 wt%, based on the total weight of the solid epoxy composition. The compositions can include one or more curing promoters.

In an embodiment, the curing promoter is an amine compound. The amine compound can be isophoronediamine, triethylenetetraamine, diethylenetriamine, 1,2- and 1,3-diaminopropane, 2,2-dimethylpropylenediamine, 1,4-diaminobutane, 1,6-diaminohexane, 1,7-diaminoheptane, 1,8-diaminooctane, 1,9-diaminononane, 1,12-diaminododecane, 4-azaheptamethylenediamine, N,N'-bis(3-aminopropyl)butane-1,4-diamine, dicyanamide, diamide diphenylmethane, diamide diphenylsulfonic acid (amine adduct), 4,4'-methylenedianiline, diethyltoluenediamine, m-phenylenediamine, p-phenylenediamine, melamine formaldehyde resins, urea formaldehyde resins, tetraethylenepentamine, 3-diethylaminopropylamine, 3,3' -iminobispropylamine, 2,4-bis(p-aminobenzyl)aniline, tetraethylenepentamine, 3-diethylaminopropylamine, 2,2,4- and 2,4,4- trimethylhexamethylenediamine, 1,2- and 1,3-diaminocyclohexane, 1,4-diamino-3,6-diethylcyclohexane, 1,2-diamino-4-ethylcyclohexane, 1,4-diamino-3,6-diethylcyclohexane, 1-cyclohexyl-3,4-diminocyclohexane, 4,4'-diaminondicyclohexylmethane, 4,4'-diaminodicyclohexylpropane, 2,2-bis(4-aminocyclohexyl)propane, 3,3'-dimethyl-4,4'-diaminodicyclohexylmethane, 3-amino-1-cyclohexaneaminopropane, 1,3- and 1,4-bis(aminomethyl)cyclohexane, m- and p-xylylenediamine, diethyl toluene diamines, or a combination comprising at least one of the foregoing. The amine compound can be a tertiary amine compound such as triethylamine, tributylamine, dimethylaniline, diethylaniline, benzyldimethylamine (BDMA), α-methylbenzyldimethylamine, *N*,*N*-dimethylaminoethanol, *N*,*N*-dimethylaminocresol, tri(*N*,*N-*dimethylaminomethyl)phenol, or a combination comprising at least one of the foregoing.

In some embodiments, the amine compound can be 4-aminophenyl sulfone (DDS), 4,4'- methylenedianiline, diethyltoluenediamine, 4,4'-methylenebis(2,6-diethylaniline), m-phenylenediamine, p-phenylenediamine, 2,4-bis(p-aminobenzyl)aniline, 3,5-diethyltoluene-2,4-diamine, 3,5-diethyltoluene-2,6-diamine, m- xylylenediamine, p-xylylenediamine, a diethyl toluene diamine, or a combination comprising at least one of the foregoing. In a preferred embodiment, the amine compound can be 4-aminophenyl sulfone (DDS), 4,4'-methylenebis-(2,6-diethylaniline) (MDEA), or a combination comprising at least one of the foregoing.

The curing promoter can be an anhydride. In some embodiments, the anhydride is benzophenone tetracarboxylic anhydride, (C₁₋₆ alkyl)styrene-maleic anhydride copolymer, chlorendic anhydride, dodecenyl succinic anhydride, hexahydrophthalic anhydride, hexahydro-4-methylphthalic anhydride, maleic anhydride, methylbutenyl tetrahydrophthalic anhydride, methylcyclohexene dicarboxylic anhydride, methylnadic anhydride, methyltetrahydrophthalic anhydride, nadic anhydride, phthalic anhydride, pyromellitic anhydride, succinic anhydride, tetrahydrophthalic anhydride, trimellitic anhydride, or a combination comprising at least one of the foregoing.

The curing promoter can be an aromatic dianhydride. Examples of aromatic dianhydride curing promotors include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride.

In an embodiment, the aromatic dianhydride compound is of the formula (17): 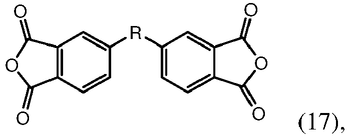 wherein R is a single bond, other bisphenols, -C(CF3)2-, -O-, -C(=O)-, or a divalent unit of the formula (18): 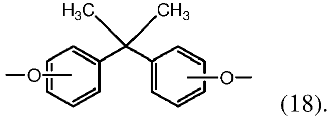 In a preferred embodiment, the aromatic dianhydride is 4,4'-(4,4'-isopropylidenediphenoxy)bis-(phthalic anhydride) (CAS Reg. No. 38103-06-9), 4,4'-(hexafluoroisopropylidene)diphthalic anhydride (CAS Reg. No. 1107-00-2), 4,4'-oxydiphthalic anhydride (CAS Reg. No. 1823-59-2), benzophenone-3,3',4,4'-tetracarboxylic dianhydride (CAS Reg. No. 2421-28-5), 3,3',4,4'-biphenyltetracarboxylic dianhydride (CAS Reg. No. 2420-87-3), or a combination comprising at least one of the foregoing.

The curing promoter can be a bicyclic anhydride. In an embodiment, the bicyclic anhydride compound can be methyl-5-norbornene-2,3-dicarboxylic anhydride (CAS Reg. No. 25134-21-8), cis-5-norbornene-endo-2,3-dicarboxylic anhydride (CAS Reg. No. 129-64-6), or a combination comprising at least one of the foregoing.

The curing promoter can be heterocyclic compound. Examples of heterocyclic compounds include benzotriazoles; triazines; piperazines such as aminoethylpiperazine, N-(3-aminopropyl)piperazine, or the like; imidazoles such as 1-methylimidazole, 2-methylimidazole, 3-methyl imidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole; cyclic amidine such as 4-diazabicyclo(2,2,2)octane (DABCO), diazabicycloundecene (DBU), 2-phenyl imidazoline, or the like; N,N-dimethylaminopyridine (DMAP); a sulfamidate; or a combination comprising at least one of the foregoing.

The curing promoter can be a phenolic compound. The phenolic compound can be novolac type phenol resins, resole type phenol resins, aralkyl type phenol resins, dicyclopentadiene type phenol resins, terpene modified phenol resins, biphenyl type phenol resins, bisphenols, triphenylmethane type phenol resins, or a combination comprising at least one of the foregoing.

Other exemplary curing promoters are commercially available as, for example, the imidazole adducts available as EPIKURE Curing Agent P-101, P-103, P-104, and P-108 from Momentive; the linear phenolic curing agent available as EPIKURE Curing Agent P-201 and P-202 from Momentive; the dicyandiamide hardener available as DYHARD 100M from Alzchem; 2-Methylimidazole, available from Long Chemical; a phenolic type curing agent containing an imidazole catalyst, available as EPOKUKDO KD-404 from Kukdo Chemical; and the modified aliphatic amine curing agents available as ANCAMINE 2441 and 2442, available from Air Products.

The solid epoxy composition can, optionally, further comprise one or more additives, including those known in the epoxy thermoset art. Such additives include, for example, colorants (including dyes and pigments), mineral fillers, antioxidants, heat stabilizers, light stabilizers, lubricants, flow modifiers, drip retardants, flame retardants, antistatic agents, substrate adhesion agents, low-profile additives, stress-relief additives, anti-crater and leveling additives, micronized waxes, processing additives for improving pigment and filler dispersion and incorporation, degassing agents, or a combination comprising at least one of the foregoing.

In some embodiments, the high heat epoxy composition does not contain a solvent. In this context, it will be understood that "solvent" does not include liquid aromatic epoxy polymers. Excluded solvents include, for example, C₃-C₈ ketones, C₄-C₈ N,N-dialkylamides, C₆-C₁₂ aromatic hydrocarbons, C₄-C₁₆ dialkyl ethers, C₃-C₆ alkyl alkanoates, and C₂-C₆ alkyl cyanides. Without being bound by theory, the exclusion of solvents can be desirable for some embodiments where the amorphous epoxy compound does not need to be dissolved, and because the presence of solvent can reduce the glass transition temperature of the high heat epoxy composition. In an embodiment, a solvent can be used to prepare homogeneous epoxy polymer blend, and the solvent can then be removed using a suitable method to obtain the high heat epoxy composition.

In an embodiment, the solid epoxy composition can further include an additional thermoset polymer. The thermoset polymer can include an aliphatic epoxy polymer, a cycloaliphatic epoxy polymer, a second aromatic epoxy polymer, a cyanate ester polymer, a carboxylated polyester polymer, or a combination comprising at least one of the foregoing. When the thermoset polymer is a second aromatic epoxy polymer, it can be the same as or different from an aromatic epoxy polymer component of the solid epoxy composition. In an embodiment, the thermoset polymer comprises an aliphatic epoxy polymer, a cycloaliphatic epoxy polymer, a bisphenol A epoxy polymer, a bisphenol-F epoxy polymer, a phenol novolac epoxy polymer, a cresol-novolac epoxy polymer, a biphenyl epoxy polymer, a naphthalene epoxy polymer, a divinylbenzene dioxide, 2-glycidylphenylglycidyl ether, a dicyclopentadiene-linked aromatic epoxy polymer, a carboxylated polyester polymer, or a combination comprising at least one of the foregoing. In a particular embodiment, the thermoset polymer comprises a carboxylated polyester polymer. The additional thermoset polymer can be used in an amount of 40 to 80 parts by weight per 100 parts by weight polymer (phr). Within this range, the additional thermoset polymer amount can be 45 to 75 parts by weight, specifically 50 to 70 parts by weight.

In another aspect, a powder coating composition is provided. The powder coating composition includes a solid composition comprising 5 to 95 wt% of an amorphous epoxy compound and 95 to 5 wt% of a high heat epoxy compound; and a curing promoter in an amount effective to cure the powder coating composition. The amorphous epoxy compound, high heat epoxy compound, and curing promoter are as provided above. The curing promoter is used in an amount effective to cure the powder coating composition. The specific amount of curing promoter used will depend on the identity of the curing promoter, among other factors, and can be readily determined by the skilled person.

The powder coating composition can, optionally, further include one or more additives, including those known in the art of powder coating. Such additives include, for example, colorants (including dyes and pigments), mineral fillers, antioxidants, heat stabilizers, light stabilizers, lubricants, flow modifiers, drip retardants, flame retardants, antistatic agents, substrate adhesion agents, low-profile additives, stress-relief additives, anti-crater and leveling additives, micronized waxes, processing additives for improving pigment and filler dispersion and incorporation, degassing agents, or the like, and a combination comprising at least one of the foregoing. Other than mineral fillers, such additives, when present, are generally used in a total amount less than or equal to 5 wt%, based on the total weight of the powder coating composition. Mineral fillers, when present can be used in an amount of 5 to 90 wt%, based on the total weight of the powder coating composition. Within this range, the mineral filler amount can be 10 to 80 wt%, specifically 20 to 70 wt%, more specifically 30 to 60 wt%. Suitable mineral fillers include, for example, silica, alumina, aluminum silicate, calcium silicate, zirconium silicate, boron nitride, boron silicate, titanium dioxide, wollastonite, barium sulfate, calcium sulfate, calcium carbonate, talc, mica, clay, hollow and solid glass spheres, kaolin, silicon carbide, molybdenum sulfide, zinc sulfide, barium titanate, barium ferrite, carbon fibers, glass fibers, or the like, and a combination comprising at least one of the foregoing.

In an embodiment, an article comprises a cured coating obtained by curing the powder coating composition of any one or more of the above-described powder coating compositions. Articles comprising cured powder coating compositions include, for example, automotive exterior components, appliances, bicycle frames, furniture, and information technology and telecommunications components. The powder coating composition can be applied to an article using any suitable method including using known equipment such as, for example, an electrostatic gun (also known as a corona gun), a tribo gun, or an aerated powder-filled bed. Once applied to an article, the coating is cured. Curing can be performed using any suitable method including using known equipment such as, for example, a convection cure oven, an infrared cure oven, or laser curing. Curing can be performed at a temperature of 190°C to 210°C for 5 to 20 minutes.

In an embodiment, the cured coating exhibits a single glass transition temperature, indicating that the high heat epoxy compound does not exist as a disperse or co-continuous phase separate from a phase comprising the cured amorphous epoxy component and the cured thermoset polymer.

The disclosed solid epoxy composition, powder coating composition, and cured coating obtained therefrom can be used in a variety of applications and articles. Exemplary uses and applications include coatings such as protective coatings, sealants, weather resistant coatings, scratch resistant coatings, and electrical insulative coatings; adhesives; binders; glues; composite materials such as those using carbon fiber and fiberglass reinforcements. When utilized as a coating, the disclosed compounds and compositions can be deposited on a surface of a variety of underlying substrates. For example, the compositions can be deposited on a surface of metals, plastics, glass, fiber sizings, ceramics, stone, wood, or any combination thereof. The disclosed compositions can be used as a coating on a surface of a metal container, such as those commonly used for packaging and containment in the paint and surface covering industries. In some instances, the coated metal is aluminum or steel.

Articles that can be prepared include, for example, electrical components and computer components. Articles that can be prepared using the disclosed curable compositions include, for example, automotive, aircraft, and watercraft exterior and interior components. In some embodiments, the article is in the form of in the form of a composite, a foam, a fiber, a layer, a coating, an encapsulant, an adhesive, a sealant, a component, a prepreg, a casing, or a combination comprising at least one of the foregoing. In certain embodiments, the disclosed curable compositions are used for the production of composite materials for use in the aerospace industry. The curable composition can be used in forming composites used for printed circuit boards. Methods of forming composites for use in printed circuit boards are known in the art and are described in, for example, U.S. Pat. No. 5,622,588 to Weber, U.S. Pat. No. 5,582,872 to Prinz, and U.S. Pat. No. 7,655,278 to Braidwood.

Additional applications include acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; printed circuit boards; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flairings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multielement assemblies; sealing of electromechanical devices; battery cases; resistors; fuses and thermal cut-off devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toners for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, or the like.

The method of forming the composite comprises partially curing the composition after the reinforcing structure has been impregnated with it. Partial curing is curing sufficient to reduce or eliminate the wetness and tackiness of the composition but not so great as to fully cure the composition. The resin in a prepreg is customarily in the partially cured state, and those skilled in the thermoset arts, and particularly the reinforced composite arts, understand the concept of partial curing and how to determine conditions to partially cure a resin without undue experimentation. References herein to properties of the "cured composition" refer to a composition that is substantially fully cured. For example, the resin in a laminate formed from prepregs is typically substantially fully cured. One skilled in the thermoset arts can determine whether a sample is partially cured or substantially fully cured without undue experimentation. For example, one can analyze a sample by differential scanning calorimetry to look for an exotherm indicative of additional curing occurring during the analysis. A sample that is partially cured will exhibit an exotherm. A sample that is substantially fully cured will exhibit little or no exotherm.

Commercial-scale methods of forming composites are known in the art, and the curable compositions described herein are readily adaptable to existing processes and equipment. For example, prepregs are often produced on treaters. The main components of a treater include feeder rollers, a resin impregnation tank, a treater oven, and receiver rollers. The reinforcing structure (E-glass, for example) is usually rolled into a large spool. The spool is then put on the feeder rollers that turn and slowly roll out the reinforcing structure. The reinforcing structure then moves through the resin impregnation tank, which contains the curable composition. The varnish impregnates the reinforcing structure. After emerging from the tank, the coated reinforcing structure moves upward through the vertical treater oven, which is typically at a temperature of 175 to 200°C, and the solvent of the varnish is boiled away. The resin begins to polymerize at this time. When the composite comes out of the tower it is sufficiently cured so that the web is not wet or tacky. The cure process, however, is stopped short of completion so that additional curing can occur when laminate is made. The web then rolls the prepreg onto a receiver roll.

While the above-described curing methods rely on thermal curing, it is also possible to effect curing with radiation, including ultraviolet light and electron beams. Combinations of thermal curing and radiation curing can also be used.

Processes useful for preparing the articles and materials include those generally known to the art for the processing of thermosetting resins. Such processes have been described in the literature as in, for example, Engineered Materials Handbook, Volume 1, Composites, ASM International Metals Park, Ohio, copyright 1987 Cyril A. Dostal Senior Ed, pp. 105-168 and 497-533, and "Polyesters and Their Applications" by Bjorksten Research Laboratories, Johan Bjorksten (pres.) Henry Tovey (Ch. Lit. Ass.), Betty Harker (Ad. Ass.), James Henning (Ad. Ass.), Reinhold Publishing Corporation, New York, 1956. Processing techniques include resin transfer molding; sheet molding; bulk molding; pultrusion; injection molding, including reaction injection molding (RIM); atmospheric pressure molding (APM); casting, including centrifugal and static casting open mold casting; lamination including wet or dry lay-up and spray lay up; also included are contact molding, including cylindrical contact molding; compression molding; including vacuum assisted resin transfer molding and chemically assisted resin transfer molding; matched tool molding; autoclave curing; thermal curing in air; vacuum bagging; pultrusion; Seeman's Composite Resin Infusion Manufacturing Processing (SCRIMP); open molding, continuous combination of resin and glass; and filament winding, including cylindrical filament winding. In certain embodiments, an article can be prepared from the disclosed curable compositions via a resin transfer molding process.

The disclosure is further illustrated by the following non-limiting examples.

### EXAMPLES

The materials listed in Table 1 were used in the examples. Unless specifically indicated otherwise, the amount of each component is in weight percent in the following examples, based on the total weight of the composition.

**Table 1.**

| Component | Description | Source |
|---|---|---|
| PPPBP-Epoxy | 1,1-bis(4-epoxyphenyl)-N-phenylphthalimidine, with a melting point of 157-158°C and an epoxy equivalent weight 252.5 grams/equivalent | SABIC |
| SBIPB-Epoxy | 2,2'-(((3,3,3',3'-tetramethyl-2,2',3,3'-tetrahydro-1,1'-spirobi[indene]-6,6'-diyl)bis(oxy))bis(methylene))bis(oxirane)), with a melting point of 133°C and an epoxy equivalent weight 210.9 grams/equivalent | SABIC |
| Epoxy-1 | 2,2-bis(4-hydroxyphenyl)propane-epichlorohydrin polymer, with an epoxy equivalent weight of 185 grams/equivalent, available as EPON 828 | Momentive Specialty Chemicals |
| Epoxy-2 | 2,2-bis(4-hydroxyphenyl)propane-epichlorohydrin polymer, with an epoxy equivalent weight of 528 grams/equivalent, available as EPON 1001F | Momentive Specialty Chemicals |
| Epoxy-3 | 2,2-bis(4-hydroxyphenyl)propane-epichlorohydrin polymer, with an epoxy equivalent weight of 1365 grams/equivalent, available as DER 6155 | Dow Chemicals |
| Epoxy-4 | Polyglydicidyl ether of ortho cresol novolac, with an epoxy equivalent weight of 217 grams/equivalent, available as EPON 164 | Momentive Specialty Chemicals |

Melting point (Tₘ) was determined by DSC according to ASTM D3418. A polymer sample (10-20 mg) was heated from 40 to 200°C (20°C/min), held at 200°C for 1 min, cooled to 40°C (20°C /min), then held at 40°C for 1 min, and the above heating/cooling cycle was repeated. The second heating cycle is used to obtain the Tₘ.

Glass transition temperature (T_{g}) was determined by DSC according to ASTM D3418. In a typical procedure, a polymer sample (10-20 mg) was heated from -80 to 200°C (20°C /min).

Compositions including the high heat epoxy component (hereinafter, "high heat epoxy) and the amorphous epoxy component (hereinafter, "amorphous epoxy) were prepared using the procedures described below.

### Procedures for preparing compositions.

Procedure A: The high heat epoxy was mixed with the amorphous epoxy at ambient temperature (ca. 23°C).

Procedure B: This method was used to prepare blends with 50 wt% or less of the high heat epoxy. The amorphous epoxy was heated at 100 to 140°C. The high heat epoxy was added to the melted amorphous epoxy and stirred until the blend was homogeneous. The homogeneous blend was then quickly cooled to ambient temperature.

Procedure C: This method was used to prepare blends with greater than 50 wt% of the high heat epoxy. The high heat epoxy was heated above its softening point (for example, greater than 140°C) and the amorphous epoxy was added thereto and stirred until the blend was homogeneous. The homogeneous blend was then quickly cooled to ambient temperature.

The crystalline melting points and glass transition temperatures were determined by DSC. The compositions, procedures, and results for Examples 1 to 10 and Comparative Examples 1 to 4 are summarized in Table 2. The amounts are listed in wt% of the total weight of the composition.

**Table 2.**

| | Procedure | PPPBP-Epoxy | Epoxy-1 | Epoxy-2 | Epoxy-3 | Epoxy-4 | T_{g} (°C) | Tₘ (°C) |
|---|---|---|---|---|---|---|---|---|
| Comparative Example 1 | - | 100 | 0 | 0 | 0 | 0 | - | 147 |
| Comparative Example 2 | - | 0 | 100 | 0 | 0 | 0 | -14.2 | ND |
| Comparative Example 3 | A | 80 | 20 | 0 | 0 | 0 | -12.1 | 137.3 |
| Comparative Example 4 | A | 70 | 30 | 0 | 0 | 0 | -12.9 | 144.95 |
| Example 1 | C | 80 | 20 | 0 | 0 | 0 | 47.6 | ND |
| Example 2 | C | 70 | 30 | 0 | 0 | 0 | 55.2 | ND |
| Example 3 | B | 50 | 0 | 50 | 0 | 0 | 53.26 | ND |
| Example 4 | C | 90 | 0 | 10 | 0 | 0 | 60.45 | ND |
| Example 5 | B | 20 | 0 | 0 | 80 | 0 | 68.88 | ND |
| Example 6 | B | 50 | 0 | 0 | 50 | 0 | 69.86 | ND |
| Example 7 | C | 90 | 0 | 0 | 10 | 0 | 65.25 | ND |
| Example 8 | B | 20 | 0 | 0 | 0 | 80 | 48.86 | ND |
| Example 9 | B | 50 | 0 | 0 | 0 | 50 | 55.19 | ND |
| Example 10 | C | 90 | 0 | 0 | 0 | 10 | 61.38 | ND |

| | | | | | | | | |
|---|---|---|---|---|---|---|---|---|
| ND means Not Determined. | | | | | | | | |

Comparative Examples 3 and 4 show that when the PPPBP-Epoxy and amorphous epoxy (Epoxy-1) were mixed at ambient temperature, the blends were heterogeneous mixtures as indicted by the crystalline melting points. The high melting point is problematic in formulating powder coating compositions, since the Tₘ is greater than desirable blending temperatures, which are typically below 100°C.

Examples 1-10 show that melt blending the PPPBP-Epoxy with an amorphous epoxy and subsequent cooling provides homogeneous solid epoxy compositions with T_{g} between 45 and 70°C, which are suitable for use in formulating powder coating compositions. Homogeneous and solid blends are indicated by the lack of any crystalline melting point and the single glass transition temperature, which is above room temperature.

Compositions of SBIBP-Epoxy and an amorphous epoxy compound were prepared using Procedure D.

Procedure D: Into a 100 mL flask, appropriate amounts of the epoxy components were weighed and then the flask was kept in a silicon oil bath maintained at 140°C. The mixture of epoxy components was allowed to melt completely (approximately 5-10 minutes). The melted mixture was stirred with a steel spatula until a homogeneous blend was obtained. The molten blend was then quickly transferred to a glass petri dish and cooled. Samples were given for DSC analysis.

The crystalline melting points and glass transition temperatures were determined by DSC. The compositions, procedures, and results for Example 11 and Comparative Example 5 are summarized in Table 3. The amounts are listed in wt% of the total weight of the composition.

**Table 3.**

| | Procedure | SBIBP-Epoxy | Epoxy-3 | T_{g} (°C) | Tₘ(°C) |
|---|---|---|---|---|---|
| Example 11 | - | 100 | 0 | - | 133 |
| Comparative Example 5 | D | 40 | 60 | 44.5 | ND |

| | | | | | |
|---|---|---|---|---|---|
| ND means Not Determined. | | | | | |

Comparative Example 5 shows that SBIBP-Epoxy has a high crystalline melting point. Example 11 shows that melt blending the SBIBP-Epoxy with an amorphous epoxy and cooling provides a homogeneous solid epoxy composition with T_{g} of 44.5°C, which is suitable for use in formulating a powder coating composition. Homogeneous and solid blends are indicated by the lack of any crystalline melting point and the single glass transition temperature, which is above room temperature.

The compositions, methods, articles and other aspects are further described by the Aspects below.
Aspect 1: A solid epoxy composition comprising: a high heat epoxy compound of one or more of formulas (I) to (IX) provided herein; and an amorphous epoxy compound, wherein the solid epoxy composition has a single glass transition temperature from 35 to 100°C, preferably from 40 to 95°C, wherein the solid epoxy composition exhibits no other glass transition temperature or crystalline melting point from -20 to 200°C, and wherein R¹, R², R^{a}, R^{b} , R¹³, R¹⁴, p, q, c, and t are as provided herein.
Aspect 2: The composition of Aspect 1, comprising 5 to 95 wt%, preferably 10 to 80 wt%, preferably 10 to 50 wt% of the amorphous epoxy compound, based on the total weight of the composition.
Aspect 3: The composition of any one or more of the preceding Aspects, wherein the amorphous epoxy compound is an aliphatic epoxy compound, cycloaliphatic epoxy compound, aromatic epoxy compound, bisphenol A epoxy compound, bisphenol-F epoxy compound, phenol novolac epoxy polymer, cresol-novolac epoxy polymer, biphenyl epoxy compound, triglycidyl p-aminophenol, tetraglycidyl diamino diphenyl methane, polyfunctional epoxy compound, naphthalene epoxy compound, divinylbenzene dioxide, 2-glycidylphenylglycidyl ether, dicyclopentadiene-type epoxy compound, multi aromatic type epoxy polymer, or a combination comprising at least one of the foregoing.
Aspect 4: The composition of any one or more of the preceding Aspects, wherein the amorphous epoxy compound is a bis(hydroxyphenyl)(C₁-C₆ alkyl) epichlorohydrin polymer, a polyglycidyl ether of ortho cresol novolac, or a combination comprising at least one of the foregoing.
Aspect 5: The composition of any one or more of the preceding Aspects, wherein R¹ and R² at each occurrence are each independently of the formula (XA), wherein R^{3a} and R^{3b} are each independently hydrogen or C₁-C₁₂ alkyl.
Aspect 6: The composition of any one or more of the preceding Aspects, wherein the high heat epoxy compound has the formula (1-a), and the amorphous epoxy compound is 2,2-bis(4-hydroxyphenyl)propane-epichlorohydrin polymer having an epoxy equivalent weight of 150 to 1400 grams/equivalent.
Aspect 7: The composition of any one or more of the preceding Aspects, wherein the high heat epoxy compound has the formula (I) or (VI), and the amorphous epoxy compound is a bisphenol A diglycidyl ether, a bisphenol F diglycidyl ether, a neopentylglycol diglycidyl ether, a 3,4-epoxycyclohexylmethyl-3,4-epoxycyclohexane carboxylate, a *N*,*N*-diglycidyl-4-glycidyloxyaniline, a N,N,N',N'-tetraglycidyl-4,4'-diaminodiphenylmethane, or a combination comprising at least one of the foregoing.
Aspect 8: The composition of any one or more of the preceding Aspects, wherein the high heat epoxy compound has the formula (1-a) or (6-a), wherein p and q are 0; and the amorphous epoxy compound is a 2,2-bis(4-hydroxyphenyl)propane-epichlorohydrin polymer having an epoxy equivalent weight of 150 to 1400 grams/equivalent.
Aspect 9: The composition of any one or more of the preceding Aspects, wherein the composition further comprises a curing promoter.
Aspect 10: The composition of any one or more of the preceding Aspects, wherein the composition does not contain a solvent.
Aspect 11: A method of making the solid epoxy composition of Aspect 1, comprising: heating the high heat epoxy compound and the amorphous epoxy compound at a temperature greater than a softening point of at least one of the amorphous epoxy compound or the high heat epoxy compound to provide a reaction mixture; and cooling the reaction mixture to a temperature less than the softening point to provide the solid epoxy composition.
Aspect 12: The method of Aspect 11, wherein the reaction mixture contains no solvent or reactive diluent solvent.
Aspect 13: A powder coating composition comprising a solid epoxy composition comprising 5 to 95 wt% of an amorphous epoxy compound and 95 to 5 wt% of a high heat epoxy compound; and a curing promoter in an amount effective to cure the powder coating composition, wherein the solid composition has a single glass transition temperature from 35 to 100°C, and wherein the solid composition exhibits no other glass transition temperature or crystalline melting point from -20°C to 200°C.
Aspect 14: The composition of Aspect 13, wherein the high heat epoxy compound has the formula (1-a), and the amorphous epoxy compound is a bis(hydroxyphenyl)(C₁-C₆ alkyl) epichlorohydrin polymer, a polyglycidyl ether of ortho cresol novolac, or a combination comprising at least one of the foregoing.
Aspect 15: An article comprising a cured product of the solid epoxy composition of any one or more of the preceding Aspects, preferably wherein the article is in the form of a composite, a foam, a fiber, a layer, a coating, an encapsulant, an adhesive, a sealant, a component, a prepreg, a casing, or a combination comprising at least one of the foregoing.

The compositions, methods, and articles can alternatively comprise, consist of, or consist essentially of, any appropriate components or steps herein disclosed. The compositions, methods, and articles can additionally, or alternatively, be formulated so as to be devoid, or substantially free, of any steps, components, materials, ingredients, adjuvants, or species that are otherwise not necessary to the achievement of the function or objectives of the compositions, methods, and articles.

The singular forms "a," "an," and "the" include plural referents unless the context clearly dictates otherwise. "Or" means "and/or" unless clearly indicated otherwise by context.

The endpoints of all ranges directed to the same component or property are inclusive and independently combinable (e.g., ranges of "less than or equal to 25 wt%, or 5 to 20 wt%," is inclusive of the endpoints and all intermediate values of the ranges of "5 to 25 wt%," etc.). Disclosure of a narrower range or more specific group in addition to a broader range is not a disclaimer of the broader range or larger group. Unless defined otherwise, technical and scientific terms used herein have the same meaning as is commonly understood by one of skill in the art to which this disclosure belongs. A "combination" is inclusive of blends, mixtures, alloys, reaction products, and the like.

As used herein, the term "hydrocarbyl" and "hydrocarbon" refers broadly to a substituent comprising carbon and hydrogen, optionally with 1 to 3 heteroatoms, for example, oxygen, nitrogen, halogen, silicon, sulfur, or a combination thereof; "alkyl" refers to a straight or branched chain, saturated monovalent hydrocarbon group; "alkylene" refers to a straight or branched chain, saturated, divalent hydrocarbon group; "alkylidene" refers to a straight or branched chain, saturated divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicyclic hydrocarbon group having at least three carbon atoms, "cycloalkenyl" refers to a non-aromatic cyclic divalent hydrocarbon group having at least three carbon atoms, with at least one degree of unsaturation; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents or variables are permissible provided that the substitutions do not significantly adversely affect synthesis or use of the compound. Exemplary groups that can be present on a "substituted" position include, but are not limited to, cyano; hydroxyl; nitro; azido; alkanoyl (such as a C2-6 alkanoyl group such as acyl); carboxamido; C₁₋₆ or C₁₋₃ alkyl, cycloalkyl, alkenyl, and alkynyl (including groups having at least one unsaturated linkages and from 2 to 8, or 2 to 6 carbon atoms); C₁₋₆ or C₁₋₃ alkoxys; C₆₋₁₀ aryloxy such as phenoxy; C₁₋₆ alkylthio; C₁₋₆ or C₁₋₃ alkylsulfinyl; C₁₋₆ or C₁₋₃ alkylsulfonyl; aminodi(C₁₋₆ or C₁₋₃)alkyl; C₆₋₁₂ aryl having at least one aromatic ring (e.g., phenyl, biphenyl, naphthyl, or the like, each ring either substituted or unsubstituted aromatic); C₇₋₁₉ arylalkyl having 1 to 3 separate or fused rings and from 6 to 18 ring carbon atoms; or arylalkoxy having 1 to 3 separate or fused rings and from 6 to 18 ring carbon atoms, with benzyloxy being an exemplary arylalkoxy.

## Claims

1. A solid epoxy composition comprising:
a high heat epoxy compound of one or more of formulas (I) to (IX): 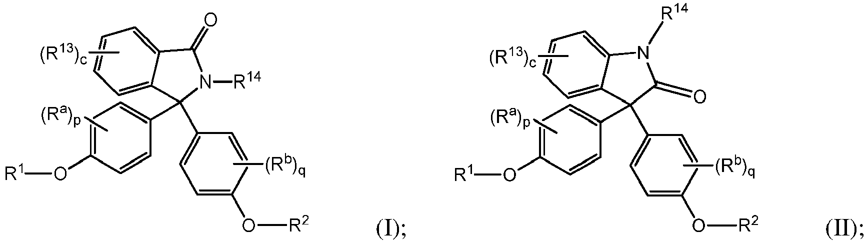 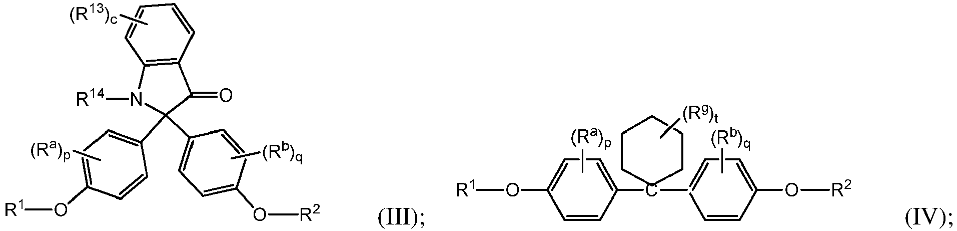 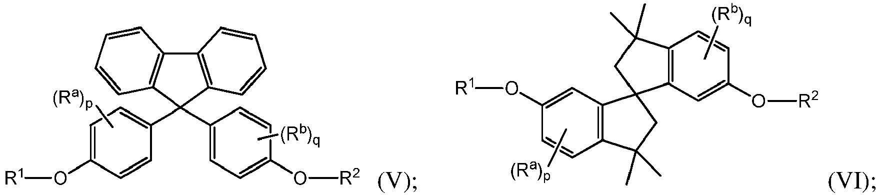 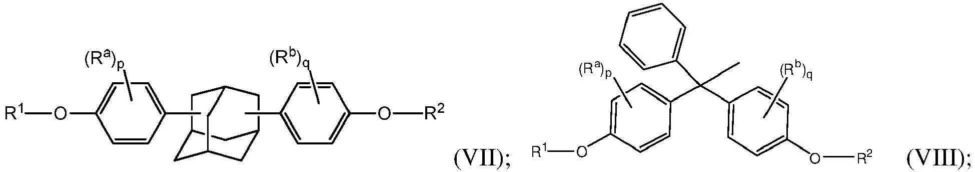 and 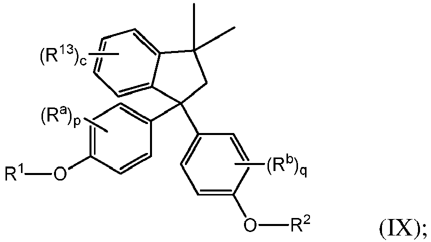 wherein
R¹ and R² at each occurrence are each independently an epoxide-containing functional group;
R^{a} and R^{b} at each occurrence are each independently halogen, C₁-C₁₂ alkyl, C₂-C₁₂ alkenyl, C₃-C₈ cycloalkyl, or C₁-C₁₂ alkoxy;
p and q at each occurrence are each independently 0 to 4;
R¹³ at each occurrence is independently a halogen or a C₁-C₆ alkyl group;
c at each occurrence is independently 0 to 4;
R¹⁴ at each occurrence is independently a C₁-C₆ alkyl, phenyl, or phenyl substituted with up to five halogens or C₁-C₆ alkyl groups;
R^{g} at each occurrence is independently C₁-C₁₂ alkyl or halogen, or two R^{g} groups together with the carbon atoms to which they are attached form a four-, five-, or six-membered cycloalkyl group;
t is 0 to 10; and
the high heat epoxy compound has a melting point greater than 100°C; and
an amorphous epoxy compound,
wherein the solid epoxy composition has a single glass transition temperature from 35 to 100°C, preferably from 40 to 95°C, measured as per ASTM D3418, and
wherein the solid epoxy composition exhibits no other glass transition temperature or crystalline melting point from -20 to 200°C.

2. The composition of claim 1, comprising 5 to 95 weight percent, preferably 10 to 80 weight percent, preferably 10 to 50 weight percent of the amorphous epoxy compound, based on the total weight of the composition.

3. The composition of any one or more of the preceding claims, wherein the amorphous epoxy compound is an aliphatic epoxy compound, cycloaliphatic epoxy compound, aromatic epoxy compound, bisphenol A epoxy compound, bisphenol-F epoxy compound, phenol novolac epoxy polymer, cresol-novolac epoxy polymer, biphenyl epoxy compound, triglycidyl p-aminophenol, tetraglycidyl diamino diphenyl methane, polyfunctional epoxy compound, naphthalene epoxy compound, divinylbenzene dioxide, 2-glycidylphenylglycidyl ether, dicyclopentadiene-type epoxy compound, multi aromatic type epoxy polymer, or a combination comprising at least one of the foregoing.

4. The composition of any one or more of the preceding claims, wherein the amorphous epoxy compound is a bis(hydroxyphenyl)(C₁-C₆ alkyl) epichlorohydrin polymer, a polyglycidyl ether of ortho cresol novolac, or a combination comprising at least one of the foregoing.

5. The composition of any one or more of the preceding claims, wherein R¹ and R² at each occurrence are each independently of the formula (XA): 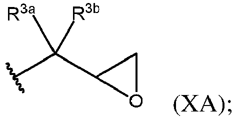 wherein R^{3a} and R^{3b} are each independently hydrogen or C₁-C₁₂ alkyl.

6. The composition of any one or more of the preceding claims, wherein the high heat epoxy compound has the formula (1-a) 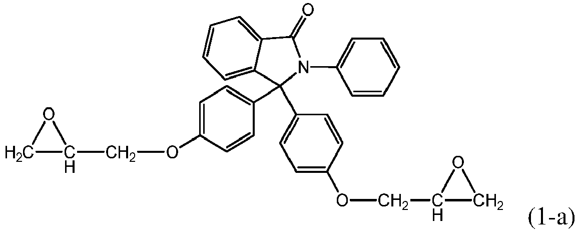 and the amorphous epoxy compound is 2,2-bis(4-hydroxyphenyl)propane-epichlorohydrin polymer having an epoxy equivalent weight of 150 to 1400 grams per equivalent.

7. The composition of any one or more of the preceding claims, wherein the high heat epoxy compound has the formula (I) or (VI) 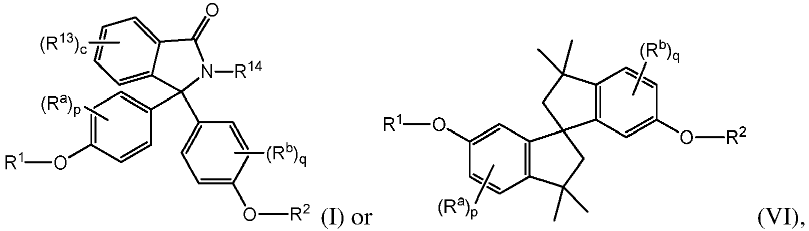 and the amorphous epoxy compound is a bisphenol A diglycidyl ether, a bisphenol F diglycidyl ether, a neopentylglycol diglycidyl ether, a 3,4-epoxycyclohexylmethyl-3,4-epoxycyclohexane carboxylate, a *N*,*N*-diglycidyl-4-glycidyloxyaniline, a N,N,N',N'-tetraglycidyl-4,4'-diaminodiphenylmethane, or a combination comprising at least one of the foregoing.

8. The composition of any one or more of the preceding claims, wherein the high heat epoxy compound is of the formula (1-a) or (6-a) 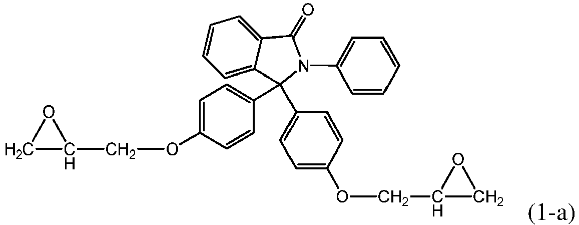 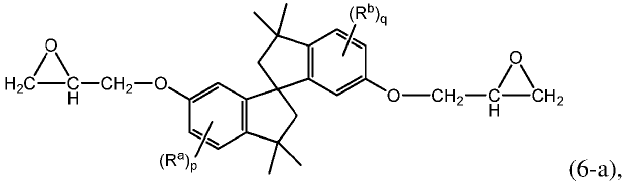 wherein p and q are 0; and the amorphous epoxy compound is a 2,2-bis(4-hydroxyphenyl)propane-epichlorohydrin polymer having an epoxy equivalent weight of 150 to 1400 grams per equivalent.

9. The composition of any one or more of the preceding claims, wherein the composition further comprises a curing promoter.

10. The composition of any one or more of the preceding claims, wherein the composition does not contain a solvent.

11. A method for the manufacture of the solid epoxy composition of claim 1, the method comprising:
heating the high heat epoxy compound and the amorphous epoxy compound at a temperature greater than a softening point of at least one of the amorphous epoxy compound or the high heat epoxy compound to provide a reaction mixture; and
cooling the reaction mixture to a temperature less than the softening point to provide the solid epoxy composition.

12. The method of claim 11, wherein the reaction mixture contains no solvent or reactive diluent solvent.

13. A powder coating composition comprising:
a solid epoxy composition comprising 5 to 95 weight percent of an amorphous epoxy compound and 95 to 5 weight percent of a high heat epoxy compound; and
a curing promoter in an amount effective to cure the powder coating composition,
wherein the solid composition has a single glass transition temperature from 35 to 100°C, measured as per ASTM D3418, and
wherein the solid composition exhibits no other glass transition temperature or crystalline melting point from -20 to 200°C.

14. The composition of claim 13, wherein the high heat epoxy compound has the formula (1-a) 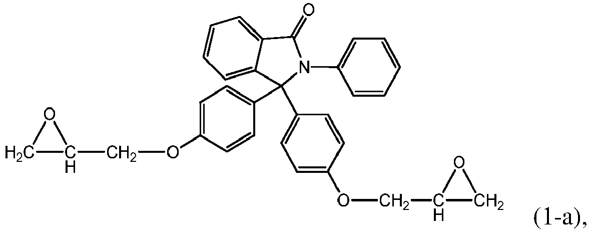 and the amorphous epoxy compound is a bis(hydroxyphenyl)(C₁-C₆ alkyl) epichlorohydrin polymer, a polyglycidyl ether of ortho cresol novolac, or a combination comprising at least one of the foregoing.

15. An article comprising a cured product of the solid epoxy composition of any one or more of claims 1 to 10 or the powder coating composition of claim 13 or 14, preferably wherein the article is in the form of a composite, a foam, a fiber, a layer, a coating, an encapsulant, an adhesive, a sealant, a component, a prepreg, a casing, or a combination comprising at least one of the foregoing.

## Patentansprüche

1. Eine feste Epoxidzusammensetzung, die Folgendes umfasst:
eine Hochtemperatur-Epoxidverbindung gemäß einer oder mehreren der Formeln (I) bis (IX): 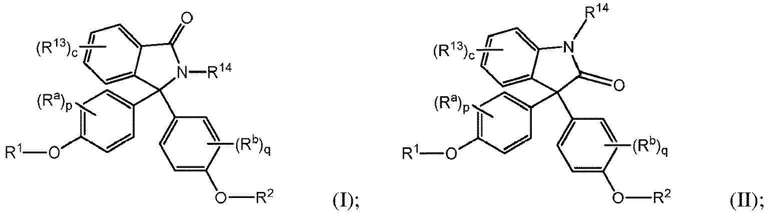 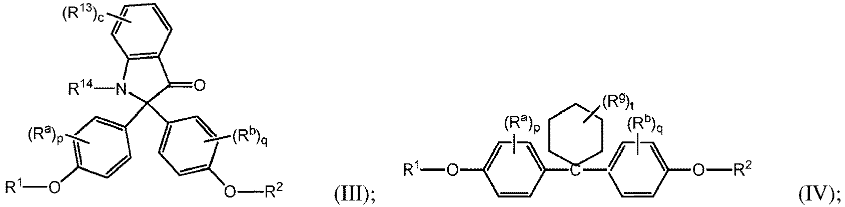 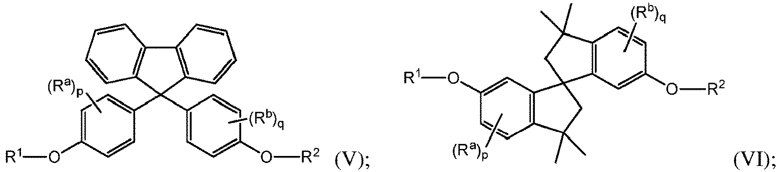 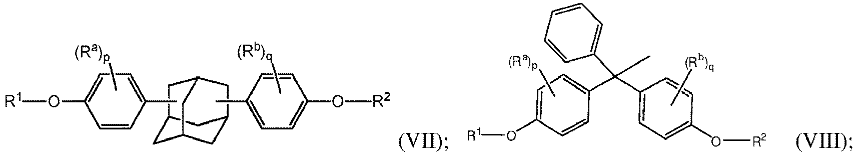 und 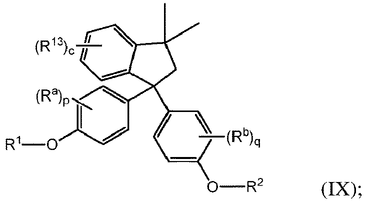 worin
R¹ und R² bei jedem Vorkommen jeweils unabhängig eine Epoxid enthaltende Funktionsgruppe sind;
R^{a} und R^{b} bei jedem Vorkommen jeweils unabhängig Halogen, C₁-C₁₂-Alkyl, C₂-C₁₂-Alkenyl, C₃-C₈-Cycloalkyl oder C₁-C₁₂-Alkoxy sind;
p und q bei jedem Vorkommen jeweils unabhängig 0 bis 4 sind;
R¹³ bei jedem Vorkommen unabhängig ein Halogen oder eine C₁-C₆-Alkylgruppe ist;
c bei jedem Vorkommen unabhängig 0 bis 4 ist;
R¹⁴ bei jedem Vorkommen unabhängig ein C₁-C₆-Alkyl, Phenyl oder Phenyl, substituiert mit bis zu fünf Halogenen oder C₁-C₆-Alkylgruppen, ist;
R^{g} bei jedem Vorkommen unabhängig C₁-C₁₂-Alkyl oder Halogen ist oder zwei R^{g}-Gruppen, gemeinsam mit den Kohlenstoffatomen, an welche sie gebunden sind, eine vier-, fünf- oder sechsgliedrige Cycloalkylgruppe bilden;
t 0 bis 10 ist und
die Hochtemperatur-Epoxidverbindung einen Schmelzpunkt über 100°C hat; und
eine amorphe Epoxidverbindung,
wobei die feste Epoxidverbindung eine einzige Glasübergangstemperatur von 35 bis 100°C, vorzugsweise von 40 bis 95°C, hat, gemessen nach ASTM D3418, und
wobei die feste Epoxidverbindung keine andere Glasübergangstemperatur oder keinen kristallinen Schmelzpunkt von -20 bis 200°C aufweist.

2. Die Zusammensetzung gemäß Anspruch 1, die 5 bis 95 Gewichtsprozent, vorzugsweise 10 bis 80 Gewichtsprozent, vorzugsweise 10 bis 50 Gewichtsprozent der amorphen Epoxidverbindung umfasst, basierend auf dem Gesamtgewicht der Zusammensetzung.

3. Die Zusammensetzung gemäß einem beliebigen oder mehreren der obigen Ansprüche, wobei die amorphe Epoxidverbindung eine aliphatische Epoxidverbindung, cycloaliphatische Epoxidverbindung, aromatische Epoxidverbindung, Bisphenol A-Epoxidverbindung, Bisphenol F-Epoxidverbindung, ein Phenol-Novolac-Epoxidpolymer, Cresol-Novolac-Epoxidpolymer, eine Biphenylepoxidverbindung, ein Triglycidyl-p-aminophenol, Tetraglycidyldiaminodiphenylmethan, eine polyfunktionelle Epoxidverbindung, Naphthalenepoxidverbindung, Divinylbenzendioxid, 2-Glycidylphenylglycidylether, eine Epoxidverbindung vom Dicyclopentadien-Typ, ein Epoxidpolymer vom multiaromatischen Typ oder eine Kombination ist, die mindestens eines der oben Genannten umfasst.

4. Die Zusammensetzung gemäß einem beliebigen oder mehreren der obigen Ansprüche, wobei die amorphe Epoxidverbindung ein bis(Hydroxyphenyl)(C1-C6-alkyl)-epichlorhydrinpolymer, ein Polyglycidylether von ortho-Cresol-Novolac oder eine Kombination ist, die mindestens eines der oben Genannten umfasst.

5. Die Zusammensetzung gemäß einem beliebigen oder mehreren der obigen Ansprüche, wobei R¹ und R² bei jedem Vorkommen jeweils unabhängig die Formel (XA) haben: 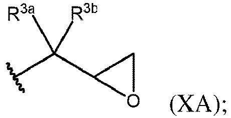 worin R^{3a} und R^{3b} jeweils unabhängig Wasserstoff oder C₁-C₁₂-Alkyl sind.

6. Die Zusammensetzung gemäß einem beliebigen oder mehreren der obigen Ansprüche, wobei die Hochtemperatur-Epoxidverbindung die Formel (1-a) 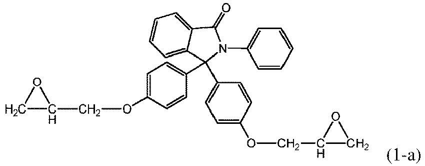 hat
und die amorphe Epoxidverbindung ein 2,2-bis(4-Hydroxyphenyl)propan-epichlorhydrinpolymer ist, das ein Epoxid-Äquivalentgewicht von 150 bis 1400 Gramm pro Äquivalent hat.

7. Die Zusammensetzung gemäß einem beliebigen oder mehreren der obigen Ansprüche, wobei die Hochtemperatur-Epoxidverbindung die Formel (I) oder (VI), 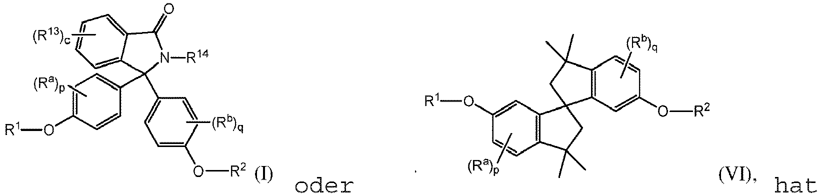 und die amorphe Epoxidverbindung ein Bisphenol A-Diglycidylether, ein Bisphenol F-Diglycidylether, ein Neopentylglykoldiglycidylether, ein 3,4-Epoxycyclohexylmethyl-3,4-epoxycyclohexancarboxylat, ein N,N-Diglycidyl-4-glycidyloxyvanilin, ein N,N,N',N'-Tetraglycidyl-4,4'-diaminodiphenylmethan oder eine Kombination ist, die mindestens eines der oben Genannten umfasst.

8. Die Zusammensetzung gemäß einem beliebigen oder mehreren der obigen Ansprüche, wobei die Hochtemperatur-Epoxidverbindung die Formel (1-a) oder (6-a) 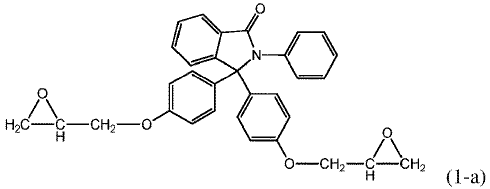 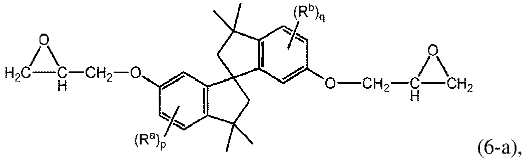 hat,
worin p und q 0 sind; und die amorphe Epoxidverbindung ein 2,2-bis(4-Hydroxyphenyl)propan-epichlorhydrinpolymer mit einem Epoxid-Äquivalentgewicht von 150 bis 1400 Gramm pro Äquivalent ist.

9. Die Zusammensetzung gemäß einem beliebigen oder mehreren der obigen Ansprüche, wobei die Zusammensetzung weiter einen Härtungsvermittler umfasst.

10. Die Zusammensetzung gemäß einem beliebigen oder mehreren der obigen Ansprüche, wobei die Zusammensetzung kein Lösungsmittel enthält.

11. Ein Verfahren zur Herstellung der festen Epoxidzusammensetzung gemäß Anspruch 1, wobei das Verfahren Folgendes umfasst:
das Erhitzen der Hochtemperatur-Epoxidverbindung und der amorphen Epoxidverbindung bei einer Temperatur, die höher ist als ein Erweichungspunkt der amorphen Epoxidverbindung und/oder der Hochtemperatur-Epoxidverbindung, um eine Reaktionsmischung zu bilden; und
das Abkühlen der Reaktionsmischung auf eine Temperatur, die niedriger ist als der Erweichungspunkt, um die feste Epoxidzusammensetzung zu bilden.

12. Das Verfahren gemäß Anspruch 11, wobei die Reaktionsmischung kein Lösungsmittel oder Reaktivverdünner-Lösungsmittel enthält.

13. Eine Pulverbeschichtungszusammensetzung, die Folgendes umfasst:
eine feste Epoxidzusammensetzung, die 5 bis 95 Gewichtsprozent einer amorphen Epoxidverbindung und 95 bis 5 Gewichtsprozent einer Hochtemperatur-Epoxidverbindung umfasst; und
einen Härtungsvermittler in einer Menge, die wirksam ist, um die Pulverbeschichtungszusammensetzung zu härten,
wobei die feste Zusammensetzung eine einzige Glasübergangstemperatur von 35 bis 100°C, gemessen nach ASTM D3418, hat und
wobei die feste Zusammensetzung keine andere Glasübergangstemperatur oder keinen kristallinen Schmelzpunkt von -20 bis 200°C aufweist.

14. Die Zusammensetzung gemäß Anspruch 13, wobei die Hochtemperatur-Epoxidverbindung die Formel (1-a) 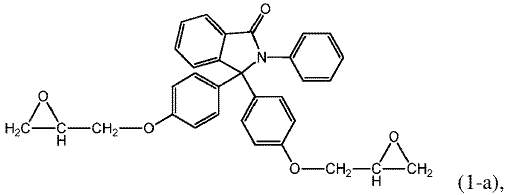 hat und die amorphe Epoxidverbindung ein bis(Hydroxyphenyl)(C₁-C₆-alkyl)epichlorhydrinpolymer, ein Polyglycidylether von ortho-Cresol-Novolac oder eine Kombination ist, die mindestens eines der oben Genannten umfasst.

15. Ein Gegenstand, der ein gehärtetes Produkt der festen Epoxidzusammensetzung gemäß einem beliebigen oder mehreren der Ansprüche 1 bis 10 oder die Pulverbeschichtungszusammensetzung gemäß Anspruch 13 oder 14 umfasst, wobei der Gegenstand vorzugsweise in Form eines Verbundstoffs, eines Schaums, einer Faser, einer Schicht, einer Beschichtung, eines Verkapselungsmittels, eines Klebstoffs, einer Dichtungsmasse, einer Komponente, eines Prepregs, eines Gehäuses oder einer Kombination vorliegt, die mindestens eines der oben Genannten umfasst.

## Revendications

1. Composition époxy solide comprenant :
un composé époxy haute température répondant à une ou plusieurs des formules (I) à (IX) : 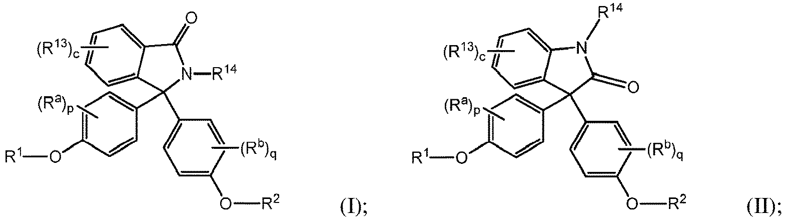 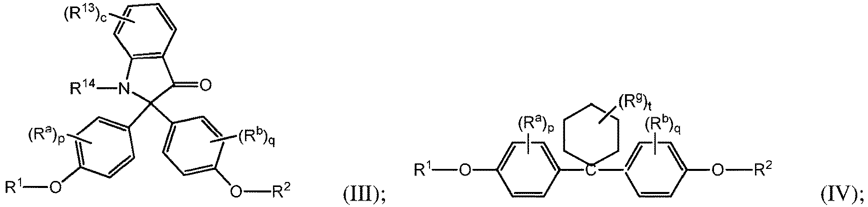 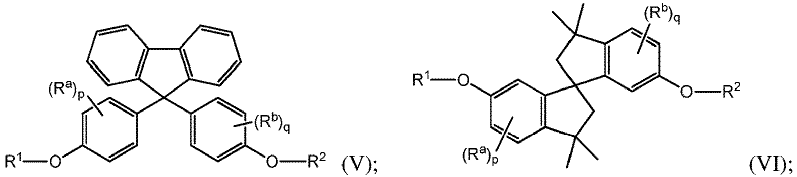 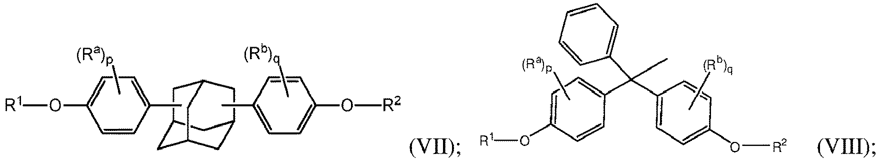 et 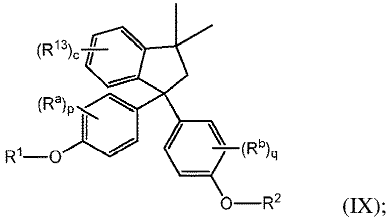 formules dans lesquelles
R¹ et R², à chaque occurrence, est chacun indépendamment un groupe fonctionnel contenant un époxyde ;
R^{a} et R^{b}, à chaque occurrence, est chacun indépendamment un halogène, alkyle en C₁ à C₁₂, alcényle en C₂ à C₁₂, cycloalkyle en C₃ à C₈, ou alcoxy en C₁ à C₁₂ ;
p et q, à chaque occurrence, vaut chacun indépendamment de 0 à 4 ;
R¹³, à chaque occurrence, est indépendamment un halogène ou un groupe alkyle en C₁ à C₆ ;
c, à chaque occurrence, vaut indépendamment de 0 à 4 ;
R¹⁴, à chaque occurrence, est indépendamment un alkyle en C₁ à C₆, phényle, ou phényle substitué par jusqu'à cinq halogènes ou groupes alkyle en C₁ à C₆ ;
R^{g}, à chaque occurrence, est indépendamment un halogène ou alkyle en C₁ à C₁₂, ou bien deux groupes R^{g}, conjointement avec les atomes de carbone auxquels ils sont rattachés, forment un groupe cycloalkyle à quatre, cinq ou six chaînons ;
t vaut de 0 à 10 ; et
lequel composé époxy haute température a un point de fusion supérieur à 100°C ; et
un composé époxy amorphe,
laquelle composition d'époxy solide a une seule température de transition vitreuse de 35 à 100°C, de préférence de 40 à 95°C, mesurée conformément à la norme ASTM D3418, et
laquelle composition époxy solide ne présente pas d'autre température de transition vitreuse ou point de fusion cristalline dans la plage allant de -20 à 200°C.

2. Composition selon la revendication 1, comprenant 5 à 95 % en poids, de préférence 10 à 80 % en poids, de préférence 10 à 50 % en poids du composé époxy amorphe, par rapport au poids total de la composition.

3. Composition selon l'une quelconque ou plusieurs des revendications précédentes, dans laquelle le composé époxy amorphe est un composé époxy aliphatique, un composé époxy cycloaliphatique, un composé époxy aromatique, un composé époxy de bisphénol A, un composé époxy de bisphénol F, un polymère époxy de phénol-novolaque, un copolymère époxy de crésol-novolaque, un composé biphényl-époxy, le triglycidyl-p-aminophénol, le tétraglycidyl-diamino-diphénylméthane, un composé époxy polyfonctionnel, un composé époxy naphtalène, le dioxyde de divinylbenzène, le 2-glycidylphényl-glycidyléther, un composé époxy de type dicyclopentadiène, un polymère époxy de type polyaromatique, ou une combinaison comprenant au moins l'un des précédents.

4. Composition selon l'une quelconque ou plusieurs des revendications précédentes, dans laquelle le composé époxy amorphe est un polymère de bis(hydroxyphényl)(alkyle en C₁ à C₆) épichlorhydrine, un polyglycidyléther d'orthocrésol-novolaque, ou une combinaison comprenant au moins l'un des précédents.

5. Composition selon l'une quelconque ou plusieurs des revendications précédentes, dans laquelle chacun de R¹ et R², à chaque occurrence, est indépendamment de formule (XA) : 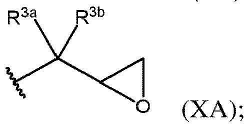 dans laquelle chacun de R^{3a} et R^{3b} est indépendamment l'hydrogène ou un alkyle en C₁ à C₁₂.

6. Composition selon l'une quelconque ou plusieurs des revendications précédentes, dans laquelle le composé époxy haute température est de formule (1-a) 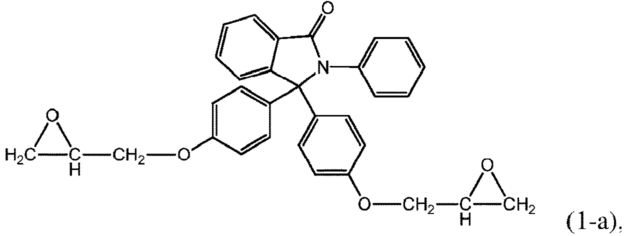 et le composé époxy amorphe est un polymère de 2,2-bis(4-hydroxyphényl)propane-épichlorhydrine ayant un poids équivalent époxy de 150 à 1400 grammes par équivalent.

7. Composition selon l'une quelconque ou plusieurs des revendications précédentes, dans laquelle le composé époxy haute température est de formule (I) ou (VI) 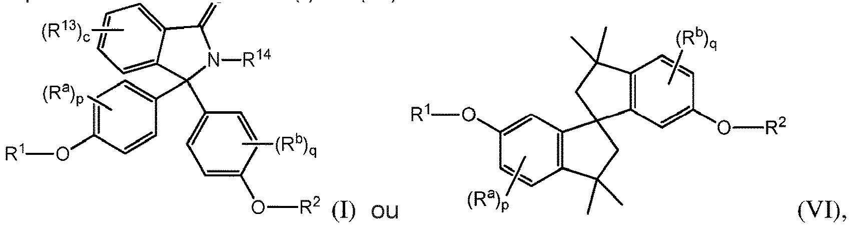 et le composé époxy amorphe est un éther diglycidylique de bisphénol A, un éther diglycidylique de bisphénol F, un éther diglycidylique de néopentylglycol, carboxylate de 3,4-époxycyclohexylméthyl-3,4-époxycyclohexane, une *N*,*N*-diglycidyl-4-glycidyloxyaniline, un N,N,N',N'-tétraglycidyl-4,4'-diaminodiphénylméthane, ou une combinaison comprenant au moins l'un des précédents.

8. Composition selon l'une quelconque ou plusieurs des revendications précédentes, dans laquelle le composé époxy haute température est de formule (1-a) ou (6-a) 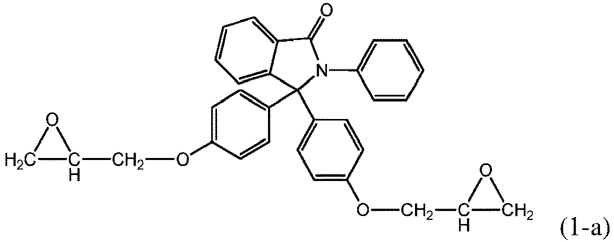 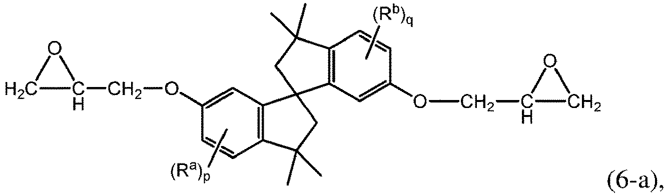 formules dans lesquelles q et p valent 0 ; et le composé époxy amorphe est un polymère de 2,2-bis(4-hydroxyphényl)propane-épichlorhydrine ayant un poids équivalent époxy de 150 à 1400 grammes par équivalent.

9. Composition selon l'une quelconque ou plusieurs des revendications précédentes, laquelle composition comprend en outre un promoteur de durcissement.

10. Composition selon l'une quelconque ou plusieurs des revendications précédentes, laquelle composition ne contient pas de solvant.

11. Procédé pour la fabrication de la composition époxy solide de la revendication 1, le procédé comprenant :
le chauffage du composé époxy haute température et du composé époxy amorphe à une température supérieure au point de ramollissement d'au moins l'un parmi le composé époxy amorphe et le composé époxy haute température pour former un mélange réactionnel ; et
le refroidissement du mélange réactionnel à une température inférieure au point de ramollissement pour former la composition époxy solide.

12. Procédé selon la revendication 11, dans lequel le mélange réactionnel ne contient pas de solvant ou de solvant diluant réactif.

13. Composition de revêtement en poudre comprenant :
une composition époxy solide comprenant 5 à 95 % en poids d'un composé époxy amorphe et 95 à 5 % en poids d'un composé époxy haute température ; et
un promoteur de durcissement en une quantité efficace pour durcir la composition de revêtement en poudre,
dans laquelle la composition solide a une seule température de transition vitreuse, de 35 à 100°C, mesurée conformément à la norme ASTM D3418, et
dans laquelle la composition solide ne présente pas d'autre température de transition vitreuse ou point de fusion cristalline dans la plage allant de -20 à 200°C.

14. Composition selon la revendication 13, dans laquelle le composé époxy haute température est de formule (1-a) : 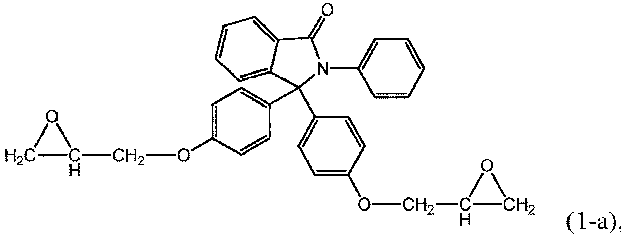 et le composé époxy amorphe est un polymère de bis(hydroxyphényl)-(alkyle en C₁ à C₆)-épichlorhydrine, un éther polyglycidylique d'orthocrésol-novolaque ou une combinaison comprenant au moins l'un des précédents.

15. Article comprenant un produit durci de la composition époxy solide de l'une quelconque des revendications 1 à 10 ou la composition de revêtement en poudre de la revendication 13 ou 14, de préférence lequel article est sous la forme d'un composite, d'une mousse, d'une fibre, d'une couche, d'un revêtement, d'un encapsulant, d'un adhésif, d'un étanchéifiant, d'un composant, d'un préimprégné, d'un boîtier, ou d'une combinaison comprenant au moins l'un des précédents.
